# EUROPÄISCHE PATENTSCHRIFT

(11) **EP 3 295 138 B1**
(45) Veröffentlichungstag und Bekanntmachung des Hinweises auf die Patenterteilung: **20.03.2019**
(21) Anmeldenummer: 16706178.7
(22) Anmeldetag: 24.02.2016
(51) Int. Cl.: G01J 3/453, G01J 3/02

(54) **STATISCHES FOURIER-TRANSFORMATIONS-SPEKTROMETER**
STATIC FOURIER TRANSFORM SPECTROMETER
SPECTROMÈTRE À TRANSFORMÉE DE FOURIER STATIQUE

(30) Priorität: 12.05.2015 DE 102015208796
(43) Veröffentlichungstag der Anmeldung: 21.03.2018
(73) Patentinhaber: Technische Universität München, 80333 München (DE)
(72) Erfinder: SCHARDT, Michael, 80686 München (DE)
(74) Vertreter: PATERIS Patentanwälte PartmbB
(86) Internationale Anmeldenummer: PCT/EP2016/053829
(87) Internationale Veröffentlichungsnummer: WO 2016/180551

(56) Entgegenhaltungen:
- EP-A1- 2 264 416
- FR-A1- 2 787 186
- LUCEY PAUL G ET AL: "A Fabry-Perot interferometer with a spatially variable resonance gap employed as a Fourier transform spectrometer", ALGORITHMS AND TECHNOLOGIES FOR MULTISPECTRAL, HYPERSPECTRAL, AND ULTRASPECTRAL IMAGERY XVII, SPIE, 1000 20TH ST. BELLINGHAM WA 98225-6705 USA, Bd. 8048, Nr. 1, 13. Mai 2011 (2011-05-13) , Seiten 1-9, XP060016688, DOI: 10.1117/12.886534 [gefunden am 1901-01-01]
- JUNTTILA M L ET AL: "PERFORMANCE LIMITS OF STATIONARY FOURIER SPECTROMETERS", JOURNAL OF THE OPTICAL SOCIETY OF AMERICA A, OPTICAL SOCIETY OF AMERICA, US, Bd. 8, Nr. 9, 1. September 1991 (1991-09-01), Seiten 1457-1462, XP000222836, ISSN: 1084-7529
- H. H. LI: "Refractive Index of ZnS, ZnSe, and ZnTe and Its Wavelength and Temperature Derivatives", JOURNAL OF PHYSICAL AND CHEMICAL REFERENCE DATA, Bd. 13, Nr. 1, 1. Januar 1984 (1984-01-01) , Seiten 103-150, XP055273326, US ISSN: 0047-2689, DOI: 10.1063/1.555705

## Beschreibung

Die Erfindung betrifft ein statisches Fourier-Transformations-Spektrometer. Fourier-Transformations-Infrarotspektroskopie (FTIR-Spektroskopie) hat sich aufgrund ihres hohen Signal-Rausch-Verhältnisses und ihrer hohen spektralen Auflösung als Standardverfahren zur spektroskopischen Analyse infraroter Strahlung etabliert. Aufgrund der charakteristischen Absorption von Infrarotstrahlung durch verschiedene Moleküle kann mit Hilfe von Infrarot-Spektroskopie die chemische Zusammensetzung von Gasen, Flüssigkeiten und Festkörpern zerstörungsfrei bestimmt werden. So finden sich in der Industrie zahlreiche FTIR-Spektrometer zur Prozesskontrolle, wie z.B. bei der Medikamentenherstellung zur Qualitätskontrolle oder in Molkereien zur online Milchfettmessung.

Handelsübliche FTIR-Spektrometer beinhalten bedingt durch ihre Funktionsweise bewegliche Komponenten, so dass der Betrieb eines solchen Spektrometers unter widrigen Umweltbedingungen, wie insbesondere Temperaturschwankungen oder Vibrationen, nur durch komplexe und teure Kompensationstechniken möglich wird. Dispersive Spektrometer, die in der Regel ohne beweglichen Teile arbeiten und deshalb bei geringeren Kosten eine höhere Robustheit als FTIR-Spektrometer zeigen, weisen jedoch aufgrund ihres Wirkprinzips, d.h. der Aufspaltung nach Wellenlängen und der Notwendigkeit eines Eingangsspalts, im längerwelligen Infrarotbereich, d.h. bei Wellenlängen größer als 3 Mikrometer, ein deutlich schlechteres Signal-Rausch-Verhältnis auf. Zwischen diesen beiden Polen, FTIR-Spektrometern auf der einen und dispersiven Spektrometern auf der anderen Seite, steht das statische FTIR-Spektrometer, das nach dem Prinzip eines FTIR-Spektrometers funktioniert und dennoch keine beweglichen Teile aufweist. Wo bei klassischen FTIR-Spektrometern die Information in Form eines Interferogramms über die Zeit aufgenommen wird, wird das Interferogramm im statischen FTIR-Spektrometer über den Ort auf einem Detektorarray erzeugt. So können die Vorteile der FTIR-Spektroskopie mit den Vorteilen der dispersiven Spektroskopie kombiniert werden. Es entsteht ein robustes Spektrometer mit hohem Signal-Rausch-Verhältnis im Infrarotbereich. Zudem sind, da das Interferogramm im statischen Aufbau sofort am Detektor anliegt, prinzipiell sehr schnelle Messgeschwindigkeiten möglich.

Aufgrund der Aufweitung des Interferogramms im Raum und der aktuellen Zeilendetektortechnologie im infraroten Wellenlängenbereich erreicht das vorgestellte statische FTIR-Spektrometer jedoch nicht die Leistungsfähigkeit eines klassischen FTIR-Spektrometers hinsichtlich des Signal-Rausch-Verhältnisses und des spektralen Auflösungsvermögens.

Die vorgestellte Erfindung beschreibt einen neuen statischen FTIR-Spektralapparat, der unabhängig von der Ausdehnung der Lichtquelle operiert und deshalb einen hohen Lichtdurchsatz aufweist. Er zeichnet sich vor allem dadurch aus, dass er einen wesentlich geringeren Lichtverlust im Spektralapparat und einen niedrigeren Materialverbrauch als bestehende vergleichbare Designs zeigt. Herzstück dieses Aufbaus ist die doppelte Verwendung des Strahlteilers, einmal zur Aufteilung der Infrarotstrahlung in zwei Teilstrahlen und einmal zum Aufprägen einer konstanten optischen Pfaddifferenz durch den hohen Brechungsindex des Strahlteilers.

Grundsätzlich sind die Einsatzgebiete des vorgestellten statischen FTIR-Spektrometers mit denen eines klassischen FTIR-Spektrometers vergleichbar, solange das niedrigere Signal-Rausch-Verhältnis und die geringere spektrale Auflösung des statischen FTIR-Spektrometers toleriert werden können. Durch den geringen Materialeinsatz und das statische Konzept treten vor allem unter widrigen Umweltbedingungen die Vorteile der Erfindung hervor. So kann die vorgestellte Erfindung beispielsweise zur Überwachung von Produktionsprozessen eingesetzt werden, bei denen klassische FTIR-Spektrometer-Technik bis heute nicht wirtschaftlich darstellbar ist. Zudem ist ein Einsatz in der Fasersensorik zum Auslesen von Faser-Bragg-Gittern bei Lichtquellen mit geringer Intensität möglich.

### Stand der Technik

Robuste Spektrometer im mittleren Infrarotbereich (im Wellenlängenbereich von 3 µm bis 20 µm) finden sich nach dem Stand der Technik unter anderem in den drei folgenden Gruppen. Auf weitere Arten von Spektrometern für den mittleren Infrarotbereich wird nicht weiter eingegangen, da sich ihre technische Umsetzung deutlich von der hier dargestellten Erfindung unterscheidet.

Als erste Gruppe sind die zeitlich modulierenden FTIR-Spektrometer genannt, die sich durch spezielle Techniken, wie insbesondere Doppelpendelinterferometer nach [1] oder Retroreflektoren nach [2], robust gegenüber Vibrationen und Temperaturschwankungen zeigen, dafür jedoch auch eine höhere Komplexität aufweisen. Durch die mit dem Einsatz des Fourier-Transformations-Prinzips einhergehende exzellente Leistungsfähigkeit in Bezug auf spektrale Bandbreite, Auflösung und Signal-Rausch-Verhältnis ist diese Art von Spektrometer vielseitig einsetzbar.

Zum anderen finden sich viele dispersive Techniken (Gitterspektroskopie, linear variable Filter, Bandpasssysteme, ...) in Spektrometern im mittleren Infrarotbereich, deren Robustheit auch ohne großen Zusatzaufwand aufgrund des Fehlens beweglicher Teile erhöht ist. Durch das sofortige Anliegen des Spektrums am verwendeten Detektor zeichnen sie sich meist durch hohe Messgeschwindigkeiten aus. In der Regel sind diese Spektrometer weit weniger komplex im Aufbau als robuste, zeitlich modulierende FTIR-Spektrometer, sind ihnen jedoch leistungstechnisch im Hinblick auf Auflösung, spektrale Bandbreite und Signal-Rausch-Verhältnis deutlich unterlegen.

Die dritte Gruppe robuster Spektrometer im mittleren Infrarotbereich stellt mit den statischen FTIR-Spektrometern einen Kompromiss aus beiden oben genannten Prinzipien, zeitlich modulierenden FTIR-Spektrometern und dispersiven Spektrometern, dar. Hierbei wird durch geschickte Anordnung optischer Komponenten die zu vermessende Infrarotstrahlung über einem Zeilendetektor zur Interferenz gebracht, so dass eine anschließende Fourier-Transformation des Detektorsignals zum gewünschten Spektrum führt. Das bei zeitlich modulierenden FTIR-Spektrometern über die Zeit erzeugte Interferenzsignal, das sogenannte Interferogramm, wird hier also über dem Ort erzeugt und durch einen Zeilendetektor aufgenommen, wodurch hohe Messgeschwindigkeiten möglich werden.

Durch den Verzicht auf bewegliche Teile weisen statische FTIR-Spektrometer im Vergleich zu ihren zeitlich modulierenden Pendants eine höhere Robustheit bei geringer Komplexität auf. Während sie durch technische Beschränkungen der Zeilendetektoren den zeitlich modulierenden FTIR-Spektrometern im Hinblick auf Auflösung, spektrale Bandbreite und Signal-Rausch-Verhältnis deutlich unterlegen sind, erzielen sie durch die Ausnutzung des Fourier-Transformations-Prinzips einen höheren Lichtdurchsatz bzw. ein besseres Signal-Rausch-Verhältnis als dispersive Spektrometer. Da sich die vorgestellte Erfindung der Gruppe der statischen FTIR-Spektrometer zurechnen lässt, wird nun im Folgenden der Stand der Technik dieser speziellen Spektrometergruppe genauer dargestellt.

Allen statischen FTIR-Spektrometern ist zu Eigen, dass sie das zur Spektrenberechnung nötige Interferogramm im Raum erzeugen. Dies kann nach dem Stand der Technik zum einen über Kippen oder treppenförmiges Gestalten von Spiegeln in klassischen Michelson- oder Mach-Zehnder-Interferometern [3]. durch Doppelspiegelinterferometer [4] oder durch miniaturisierte statische Lamellengitterinterferometer [5] erfolgen. Alle diese Konzepte weisen jedoch eine Abhängigkeit der Sichtbarkeit des Interferogramms von der Abstrahlfläche der Lichtquelle auf [6]. Da die aufgrund der geringen Leistungsdichten im mittleren Infrarot benötigten großen Abstrahlflächen bei den obengenannten Konzepten bereits zu einem Verschwinden des Interferogramms führen, sind diese Techniken bei Verwendung ungekühlter Detektoren nicht für Spektroskopie in diesem Wellenlängenbereich geeignet.

Eine andere Möglichkeit, Interferogramme im Raum zu erzeugen, ist die Verwendung von doppelbrechenden Materialien. Dabei wird das einfallende Licht in zwei orthogonale Polarisationsrichtungen aufgeteilt und anschließend zur Interferenz gebracht. So können statische Fourier-Transformations-Spektrometer mit großem Eingangswinkel konstruiert werden [7]. Die dafür nötigen doppelbrechenden Materialien sind jedoch im mittleren Infrarotbereich nicht transparent, so dass ein Einsatz dieser Technik in diesem Wellenlängenbereich nicht möglich ist.

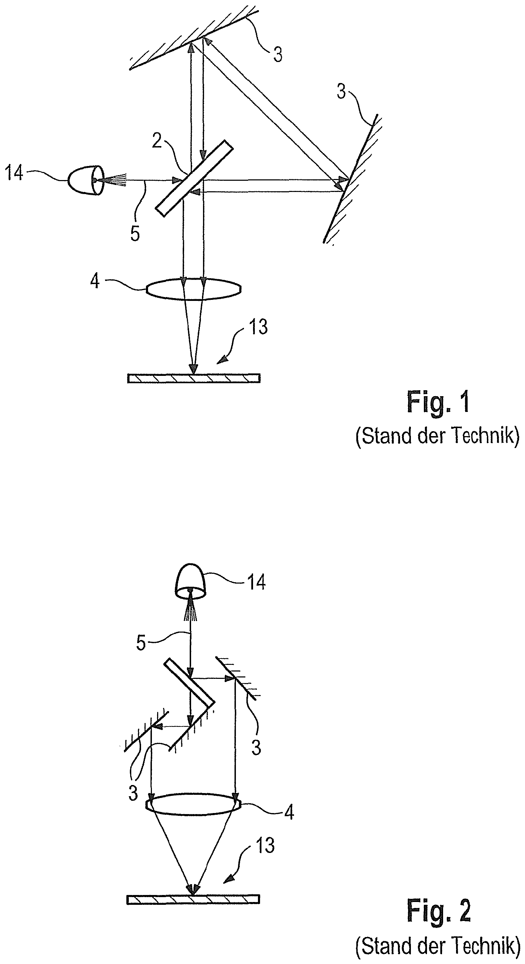

Zwei für den mittleren Infrarotbereich geeignete statische Spektrometerdesigns sind das statische common-path Interferometer [8] und das statische modifizierte Mach-Zehnder-Interferometer [6, S. 1461]. Da sich diese Konzepte am geringsten von der vorgestellten Erfindung unterscheiden, ist ein Überblick über beide Designs in Figur 1 und Figur 2 gegeben. Zur besseren Darstellung sind die unkollimierten Lichtstrahlen im Aufbau lediglich durch den jeweiligen Brennpunktstrahl illustriert.

Beide weisen prinzipiell keine Abhängigkeit der Sichtbarkeit des Interferogramms von der Abstrahlfläche der verwendeten Lichtquelle auf, wobei das statische modifizierte Mach-Zehnder Interferometer wesentlich schwieriger zu justieren ist als das statische common-path Interferometer. Als Varianten des statischen common-path Interferometers sind sowohl eine vollständige Kristallintegration dieses Spektrometerkonzepts [9] als auch eine Kombination mit Konkavspiegeln [10] publiziert.

[11] offenbart ein statisches Fourier-Transformation-Spektrometer mit einem Fabry-Perot Interferometer.

### Zitierte Literatur

[1] US Patent 5,309,217 A
[2] EP Patent 0 924 499 B1
[3] MÖLLER, KD: Wave-front-dividing array interferometers without moving parts for realtime spectroscopy from the IR to the UV. In: Applied optics vol. 34 (1995), Nr. 9, pp. 1493-1501
[4] JUNTTILA, M L: Stationary Fourier-transform spectrometer. In: Applied optics vol. 31 (1992), Nr. 21, pp. 4106-4112
[5] CHAU, F S; Du, Y; ZHOU, G: A micromachined stationary lamellar grating interferometer for Fourier transform spectroscopy. In: Journal of Micromechanics and Microengineering vol. 18, IOP Publishing (2008), p. 025023
[6] JUNTTILA, M L; KAUPPINEN, J; IKONEN, E: Performance limits of stationary Fourier spectrometers. In: Journal of the Optical Society of America A vol. 8 (1991), Nr. 9, pp. 1457-1462
[7] COURTIAL, J; PATTERSON, BA; HARVEY, A R; SIBBETT, W; PADGETT, M J: Design of a static Fourier-transform spectrometer with increased field of view. In: Applied optics vol. 35 (1996), Nr. 34, pp. 6698-6702
[8] SMITH, W M H; SCHEMPP, W V: Digital array scanned Interferometers for astronomy. In: L Experimental Astronomy vol. 1, Springer (1990), Nr. 6, pp. 389-405
[9] DIERKING, M P; KARIM, M A: Solid-block stationary Fourier-transform spectrometer. In: Applied optics vol. 35 (1996), Nr. 1, pp. 84-89
[10] PCT Patent Application Publication WO 2011/086357 A1
[11] Paul G. Lucey; Jason Akagi: "A Fabry Perot Interferometer with a Spatially Variably Resonance Gap Employed as a Fourier Transform Spectrometer" Algorithms and Technologies for Multispectral, Hyperspectral and Ultraspectral Imagery XVII, edited by Sylvia S. Shen, Paul E. Lewis, Proc. Of SPIE Vol. 8048, 80480K, doi: 10.1117/12.886534

Der vorgestellten Erfindung liegt die Aufgabe zugrunde, in die Erfindung einfallendes Licht spektral zu vermessen. Der Eintrittspunkt dieses einfallenden Lichts, kollimiert oder nicht kollimiert, in das hier vorgestellte Spektrometer wird im folgenden Text und in den verwendeten Bildern als Lichtquelle bezeichnet. Die spektrale Information zu vermessender Messobjekte kann so auf verschiedene Arten in die Erfindung geführt werden wie z. B. über eine Glasfaser oder über ein Linsensystem.

Die Aufgabe wird gelöst durch die Merkmale des Patentanspruchs 1.

Durch die Nutzung des Prinzips der statischen Fourier-Transformations-Spektroskopie und durch die spezielle Anordnung der optischen Komponenten ist diese spektrale Vermessung schnell und mit hohem Lichtdurchsatz möglich. Aufgrund des Fehlens beweglicher Teile ist die Erfindung zudem unempfindlich gegenüber widrigen Umweltbedingungen, wie z. B. Vibrationen. Während mit Hilfe der vorgestellten Erfindung grundsätzlich auch bis in den sichtbaren Wellenlängenbereich hinein spektrale Messungen durchgeführt werden können, zielt die Erfindung hauptsächlich auf den mittleren Infrarotbereich ab, da hier die Vorteile der Erfindung, hoher Lichtdurchsatz durch Verwendung von Lichtquellen mit großen Abstrahlflächen und durch Nutzung des Fourier-Transformations-Prinzip, deutlich zu Tage treten.

Diese Aufgabenstellung wird erfindungsgemäß dadurch gelöst, dass das einfallende Licht durch eine spezielle Anordnung optischer Komponenten in zwei Teilstrahlen aufgeteilt wird, die anschließend auf einem Zeilendetektor zur Interferenz gebracht werden. Das dadurch am Zeilendetektor entstehende Interferogramm kann schließlich durch eine Fourier-Transformation in das Spektrum des einfallenden Lichts umgewandelt werden. Anstelle

Eines Zeilendetektors kann auch ein Array-Flächendetektor verwendet werden. Ebenso kann ein Punktdetektor verwendet werden, der eine Zeile oder eine Fläche abscannt. Im Rahmen der Erfindung wird unter Zeilendetektor ein Detektor verstanden, der entlang einer Dimension Licht detektieren kann. Ebenso wird unter Array-Flächendetektor ein Detektor verstanden, der in zwei Dimensionen Licht unabhängig voneinander detektieren kann..

Das statische Fourier-Transformations-Spektrometer umfasst einen Strahlteiler, eine Spiegelvorrichtung, und eine Sammeloptik. Dabei ist vorgesehen, dass der Strahlteiler einen Eingangslichtstrahl in einen ersten Arm und in einen zweiten Arm aufteilt, wobei der erste Arm von dem Strahlteiler reflektiert ist und der zweite Arm durch den Strahlteiler hindurch verläuft. Der erste Arm und der zweite Arm enden definitionsgemäß an der Sammeloptik. Dabei ist erfindungsgemäß vorgesehen, dass der erste Arm und der zweite Arm eine identische optische Weglänge beschreiben. Im Rahmen dieser Erfindung wird von Identität ausgegangen, wenn sich die optischen Weglängen um maximal 5%, insbesondere maximal 10%, unterscheiden. Der erste Arm verläuft nach Reflexion an der Spiegelvorrichtung umlenkungsfrei zu der Sammeloptik, während der zweite Arm nach Durchlaufen des Strahlteilers umlenkungsfrei zu der Sammeloptik verläuft. Unter umlenkungsfrei wird im Rahmen dieser Erfindung
verstanden, dass der jeweilige Arm geradlinig direkt zu der Sammeloptik verläuft, ohne von einem weiteren optischen Element abgelenkt oder umgelenkt zu werden. Somit verlaufen beide Arme bevorzugt zumindest abschnittsweise parallel. Ebenso ist bevorzugt vorgesehen, dass die beiden Arme unter demselben Winkel auf die Sammeloptik auftreffen. Die Sammeloptik führt den ersten Arm und den zweiten Arm zur Interferenz zusammen.

Gegenüber den auch im Stand der Technik erwähnten Grundkonzepten der Infrarot-Spektroskopie, d.h. der zeitlich modulierenden FTIR- und der dispersiven Spektroskopie, zeigt die statische FTIR-Spektroskopie die bereits genannten Vorteile.

So weist sie im Vergleich zu handelsüblichen, zeitlich modulierenden FTIR-Spektrometern eine höhere Robustheit und Geschwindigkeit bei geringerer Komplexität auf. Gegenüber dispersiven Techniken verspricht sie durch Nutzung des Fourier-Transformations-Prinzips einen höheren Lichtdurchsatz, also ein besseres Signal-Rausch-Verhältnis bei ähnlicher Robustheit, aber steigender Komplexität.

Die Unteransprüche haben bevorzugte Weiterbildungen der Erfindung zum Inhalt.

Bevorzugt ist ein Brechungsindex des Strahlteilers größer als ein Brechungsindex einer Umgebung des Statischen Fourier-Transformations-Spektrometers. Auf diese Weise ist eine optische Weglänge des zweiten Arms unterschiedlich von einer geometrischen Weglänge des zweiten Arms. Durch eine Tiefe des Strahlteifers ist bevorzugt eine Weglängendifferenz zwischen optischem Weg und geometrischem Weg des zweiten Arms einstellbar. Außerdem ist bevorzugt vorgesehen, dass die optische Weglänge des ersten Arms gleich der optischen Weglänge des zweiten Arms ist. Hinsichtlich des ersten Arms ist die optische Weglänge im Vakuum bevorzugt gleich der geometrischen Weglänge. Sollte der erste Arm durch Umgebungsluft verlaufen, so ist die optische Weglänge aufgrund des Brechungsindexes von Luft nahezu identisch mit der geometrischen Weglänge.

Vorteilhafterweise ist ausschließlich der erste Arm an der Spiegelvorrichtung reflektiert. Durch die Positionierung der Spiegelvorrichtung ist somit die Reflexion des ersten Arms verschiebbar, wodurch eine optische Weglänge des ersten Arms einstellbar ist. Außerdem lässt sich der erste Arm durch Ausrichtung der Spiegelvorrichtung zumindest abschnittsweise parallel zu dem zweiten Arm ausrichten.

Weiterhin ist bevorzugt vorgesehen, dass der erste Arm von maximal einer Spiegelvorrichtung reflektiert ist. Somit ist für die oben genannte Ausrichtung des ersten Arms lediglich das Justieren von einer Spiegelvorrichtung notwendig, so dass die Justierung sehr einfach und kostengünstig durchführbar ist.

Der erste Arm weist einen ersten geradlinigen Abschnitt auf, der sich zwischen der Spiegelvorrichtung und der Sammeloptik erstreckt. Ebenso weist der zweite Arm einen zweiten geradlinigen Abschnitt auf, der sich zwischen Strahlteiler und Sammeloptik erstreckt. Dabei sind der erste geradlinige Abschnitt und der zweite geradlinige Abschnitt parallel zueinander ausgerichtet. Außerdem ist bevorzugt vorgesehen, dass der erste geradlinige Abschnitt und der zweite geradlinige Abschnitt parallel zu einer optischen Achse der Sammeloptik verlaufen. Alternativ ist ein Winkel zwischen dem ersten geradlinigen Abschnitt und dem zweiten geradlinigen Abschnitt von maximal 10°, bevorzugt maximal 1°, insbesondere maximal 0,5°, ermöglicht. Falls sich der Detektor nicht genau in der Brennebene der Sammeloptik befindet, ist eine Korrektur dieser Dejustierung durch eine solche leichte Abweichung bei der Parallelität des ersten geradlinigen Abschnitts des ersten Arms zum zweiten geradlinigen Abschnitt des zweiten Arms möglich. Beispielsweise kann eine Verschiebung des Detektors um 5 mm relativ zu der Sammeloptik durch eine Drehung der Spiegelvorrichtung um etwa 0,2° ausgeglichen werden, wobei die Sammeloptik bevorzugt eine Brennweite von 50 mm aufweist. Auf diese Weise gelangt der Schnittpunkt der von der Sammeloptik ursprünglich zusammengeführten Brennpunktstrahlen wieder auf den Zeilendetektor.

Das statische Fourier-Transformations-Spektrometer weist vorteilhafterweise einen Zeilendetektor auf, wobei die Sammeloptik den ersten Arm und den zweiten Arm auf dem Zeilendetektor zur Interferenz zusammenführt. In einer Alternative weist das statische Fourier-Transformations-Spektrometer vorteilhafterweise einen zweidimensionalen Array-Flächendetektor auf, wobei die Sammeloptik den ersten Arm und den zweiten Arm auf dem zweidimensionalen Array-Flächendetektor zur Interferenz zusammenführt. Wird ein zweidimensionaler Array-Flächendetektor verwendet, so ist in einer ersten Dimension das Interferogramm der Lichtquelle angetragen. Entlang der zweiten Dimension wiederholen sich die einzelnen Punkte des Interferogramms entlang gekrümmter Kurven, so dass die zweite Dimension keine zusätzliche Information enthält. Durch Mittelung der einzelnen Punkte entlang dieser Kurven gelingt jedoch eine Erhöhung des Signal-Rausch-Verhältnisses, da dieses mit der Wurzel der Anzahl an gemittelten Werten ansteigt.

Setzt man zwischen Sammellinse und Array-Flächendetektor eine Zylinderlinse, deren Brennweite und Position so gewählt ist, dass sie in Kombination mit der Sammellinse eine zeilenförmige Reihe von Lichtquellen auf die zweite Dimension des Detektors abbildet, kann zusätzlich die spektrale Information ortsaufgelöst entlang der Reihe vermessen werden. Es entsteht ein hyperspektrales Spektrometer. Durch die unterschiedlichen geometrischen Wege beider Teilstrahlen ist die Ortsauflösung jedoch begrenzt.

Vorteilhaft ist eine Vorschaltoptik vor dem Strahlteiler angeordnet. Durch die Vorschaltoptik kann eine Lichtquelle nahezu beliebig vor dem Strahlteiler positioniert werden, insbesondere entfällt durch die Vorschaltoptik die Voraussetzung, dass die Lichtquelle möglichst nah an dem Strahlteiler zu positionieren ist. Der Eingangslichtstrahl ist daher von der Vorschaltoptik auf den Strahlteiler leitbar. Bevorzugt umfasst die Vorschaltoptik eine Konvexlinse und/oder einen Konkavspiegel, insbesondere einen off-axis Konkavspiegel. Konkavspiegel haben gegenüber Konvexlinsen den Vorteil, dass diese einen geringeren Lichtverlust und eine geringere Wellenlängenabhängigkeit als Konvexlinsen aufweisen. Im Rahmen dieser Erfindung kann der Konkavspiegel vorteilhafterweise durch einen Parabolspiegel realisiert werden.

Ebenso vorteilhaft ist eine Nachschaltoptik hinter der Sammeloptik angeordnet. Durch die Nachschaltoptik sind Verzerrungen, die aufgrund der unterschiedlichen geometrischen Weglängen des ersten Arms und des zweiten Arms auftreten können, verminderbar. Somit durchlaufen der erste Arm und der zweiter Arm zunächst die Sammeloptik und anschließend die Nachschaltoptik. Daher sind der erste Arm und der zweite Arm erst nach Durchlaufen der Nachschaltoptik zur Interferenz zusammenführbar. Die Nachschaltoptik umfasst bevorzugt eine Zylinderlinse. Die Zylinderlinse weist insbesondere eine Mittelachse auf, wobei die Mittelachse gegenüber einer optischen Achse der Sammeloptik aus einer senkrechten Stellung heraus verdrehbar ist.

Besonders vorteilhaft ist die Nachschaltoptik gegenüber einem geradlinigen Abschnitt des ersten Arms und/oder des zweiten Arms verkippbar. Der erste geradlinige Abschnitt des ersten Arms ist vorteilhafterweise parallel zu den zweiten geradlinigen Abschnitten des zweiten Arms. Die Nachschaltoptik weist bevorzugt eine optische Achse auf, die gegenüber dem ersten geradlinigen Abschnitt und/oder dem zweiten geradlinigen Abschnitt verkippt ist. Vorteilhafterweise beträgt eine derartige Verkippung einen Winkel zwischen 0° und 40°, insbesondere 20°. Durch Verkippen der Nachschaltoptik ist eine Verwaschung der Interferenz auf dem Zeilendetektor oder Array-Flächendetektor oder dem Punktdetektor unterdrückbar. Sollte ein Flächendetektor verwendet werden, so ist eine derartige Verkippung nicht zwingend notwendig.

Bevorzugt weist die Sammeloptik eine Konvexlinse auf. Alternativ oder zusätzlich weist die Sammeloptik vorteilhafterweise einen Konkavspiegel auf, wobei der Konkavspiegel insbesondere ein off-axis Konkavspiegel ist. Wie zuvor bereits beschrieben weisen Konkavspiegel gegenüber Konvexlinsen den Vorteil auf, dass diese einen geringeren Lichtverlust und eine geringere Wellenlängenabhängigkeit als Konvexlinsen zeigen.

In einer weiteren bevorzugten Ausführungsform weist die Spiegelvorrichtung des statischen Fourier-Transformations-Spektrometers einen Stufenspiegel auf. Durch den Stufenspiegel ist der erste Arm des von dem Strahlenteiler aufgeteilten Eingangslichtstrahls mehrfach von der Spiegelvorrichtung reflektierbar. Somit umfasst insbesondere der erste geradlinige Abschnitt eine Vielzahl von Teilabschnitten, wobei jeder Teilabschnitt eine unterschiedliche optische Pfaddifferenz aufweist. Da eine maximale Pfaddifferenz eines Interferogramms und eine spektrale Auflösung eines zugehörigen Spektrums reziprok im Verhältnis stehen, ist durch den Stufenspiegel die spektrale Auflösung erhöht.

Besonders bevorzugt weist der Stufenspiegel zumindest zwei parallele Spiegeloberflächen auf. Die Spiegeloberflächen sind beabstandet zueinander angeordnet. Durch das oben genannte reziproke Verhältnis führt das Vorsehen von zwei Spiegeloberflächen zu einer Verdopplung der maximalen optischen Pfaddifferenz und daher zu einer Halbierung der spektralen Auflösung. Das Vorsehen von vier parallelen Spiegeloberflächen führt somit zu einem Vierteln der spektralen Auflösung. Daher kann durch eine Modifikation der Spiegelvorrichtung die spektrale Auflösung des statischen Fourier-Transformations-Spektrometers einfach und kostengünstig verbessert werden. Sind mehr als zwei parallele Spiegeloberflächen vorhanden, so ist besonders bevorzugt vorgesehen, dass diese Spiegeloberflächen derart angeordnet sind, sodass Reflexionen an Stufenwänden der Spiegeloberflächen verhindert sind. Dies ist insbesondere derart erreichbar, dass der Stufenspiegel eine konvexe Form aufweist und besonders bevorzugt eine monoton steigende Treppenform verhindert ist.

Ein Abstand zwischen jeder der Spiegeloberflächen beträgt bevorzugt ein ganzzahliges Vielfaches einer vordefinierten Stufenhöhe. Unter einem Vielfachen ist dabei insbesondere eine Zahl aus dem Zahlenraum der natürlichen Zahlen, also alle positiven, ganzen Zahlen, zu verstehen. Besonders bevorzugt ist vorgesehen, dass jede Spiegeloberfläche einen Abstand von einer Stufenhöhe zu maximal einer weiteren Spiegeloberfläche aufweist. Außerdem ist vorteilhafterweise vorgesehen, dass jede Spiegeloberfläche einen unterschiedlichen Abstand zu allen anderen Spiegeloberflächen aufweist. Durch die unterschiedlichen Abstände als Vielfaches einer vordefinierten Stufenhöhe ist für jede Spiegeloberfläche eine unterschiedliche Pfaddifferenz vorhanden. Diese Pfaddifferenzen unterscheiden sich somit um ein Vielfaches der Stufenhöhe. Insgesamt lässt sich daher durch die Spiegeloberflächen die maximale Pfaddifferenz vergrößern, wodurch die spektrale Auflösung des statischen Fourier-Transformations-Spektrometers verringert wird.

Das Statische Fourier-Transformations-Spektrometer weist bevorzugt einen Array-Flächendetektor auf. Dabei ist vorgesehen, dass die Sammeloptik den ersten Arm und den zweiten Arm zur Interferenz auf dem Array-Flächendetektor zusammenführt. Durch den Array-Flächendetektor sind die unterschiedlichen Pfaddifferenzen des Stufenspiegels erfassbar. Dazu ist der Array-Flächendetektor in unterschiedliche Abschnitte aufgeteilt, sodass jedem der unterschiedlichen Abschnitte eine Spiegeloberfläche zugeordnet ist. Somit lassen sich die unterschiedlichen optischen Pfaddifferenzen zwischen dem ersten Arm und dem zweiten Arm in den unterschiedlichen Abschnitten des Array-Flächendetektors abbilden. Durch einen Algorithmus können die unterschiedlichen Abschnitte zusammengeführt werden, wobei die gesamte optische Pfaddifferenz im Vergleich zu einem planen Spiegel vergrößert ist. Somit ist die spektrale Auflösung des statischen Fourier-Transformations-Spektrometers verringert. Das Zusammenführen ist einfach durchführbar, da die unterschiedlichen Abschnitte und die zugehörige Pfaddifferenz aufgrund der jeweiligen Spiegeloberfläche des Stufenspiegels bekannt sind. Daher ist die spektrale Auflösung des statischen Fourier-Transformations-Spektrometers aufgrund des Stufenspiegels auf einfache und kostengünstige Weise hinsichtlich der spektralen Auflösung verbessert.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: ein statisches common-path Interferometer gemäß dem Stand der Technik,
- Fig. 2: ein statisches modifiziertes Mach-Zehnder Interferometer gemäß dem Stand der Technik,
- Fig. 3: ein statisches Fourier-Transformations-Spektrometer gemäß einem ersten Ausführungsbeispiel der Erfindung,
- Fig. 4: ein statisches Fourier-Transformations-Spektrometer gemäß einem zweiten Ausführungsbeispiel der Erfindung,
- Fig. 5: ein statisches Fourier-Transformations-Spektrometer gemäß einem dritten Ausführungsbeispiel der Erfindung,
- Fig. 6: das statische Fourier-Transformations-Spektrometer gemäß dem ersten Ausführungsbeispiel der Erfindung im Betrieb,
- Fig. 7: ein Detektorbild aus dem in Fig. 6 gezeigten Betrieb des statischen Fourier-Transformations-Spektrometer gemäß dem ersten Ausführungsbeispiel der Erfindung,
- Fig. 8: ein mit dem statischen Fourier-Transformations-Spektrometer gemäß dem ersten Ausführungsbeispiel der Erfindung aufgenommenes Interferogramm,
- Fig. 9: ein aus dem Interferogramm aus Fig. 8 berechnetes Spektrum,
- Fig. 10: einen schematischen Verlauf der Weglängendifferenzen bei dem statischen Fourier-Transformations-Spektrometer gemäß dem zweiten Ausführungsbeispiel der Erfindung,
- Fig. 11: einen weiteren schematischen Verlauf der Weglängendifferenzen bei dem statischen Fourier-Transformations-Spektrometer gemäß dem zweiten Ausführungsbeispiel der Erfindung,
- Fig. 12: eine erste schematische Abbildung eines statischen Fourier-Transformations-Spektrometers gemäß einem vierten Ausführungsbeispiel der Erfindung,
- Fig. 13: eine weitere schematische Abbildung des statischen Fourier-Transformations-Spektrometers gemäß dem vierten Ausführungsbeispiel der Erfindung,
- Fig. 14: eine schematische Abbildung des statischen Fourier-Transformations-Spektrometers gemäß dem vierten Ausführungsbeispiel der Erfindung im Betrieb,
- Fig. 15: eine weitere schematische Abbildung des statischen Fourier-Transformations-Spektrometers gemäß dem vierten Ausführungsbeispiel der Erfindung im Betrieb,
- Fig. 16: eine Spiegelvorrichtung eines statischen Fourier-Transformations-Spektrometers gemäß einem fünften Ausführungsbeispiel der Erfindung,
- Fig. 17: eine Spiegelvorrichtung eines statischen Fourier-Transformations-Spektrometers gemäß einem sechsten Ausführungsbeispiel der Erfindung,
- Fig. 18: ein Vergleich vorteilhafter und nachteilhafter Spiegelvorrichtungen des statischen Fourier-Transformations-Spektrometers gemäß dem sechsten Ausführungsbeispiel der Erfindung,
- Fig. 19: ein statisches Fourier-Transformations-Spektrometer gemäß dem fünften Ausführungsbeispiel der Erfindung,
- Fig. 20: ein mit dem statischen Fourier-Transformations-Spektrometer gemäß dem fünften Ausführungsbeispiel der Erfindung aufgenommene Weglängendifferenzverteilung und
- Fig. 21: ein mit dem statischen Fourier-Transformations-Spektrometer gemäß dem sechsten Ausführungsbeispiel der Erfindung aufgenommene Weglängendifferenzverteilung.

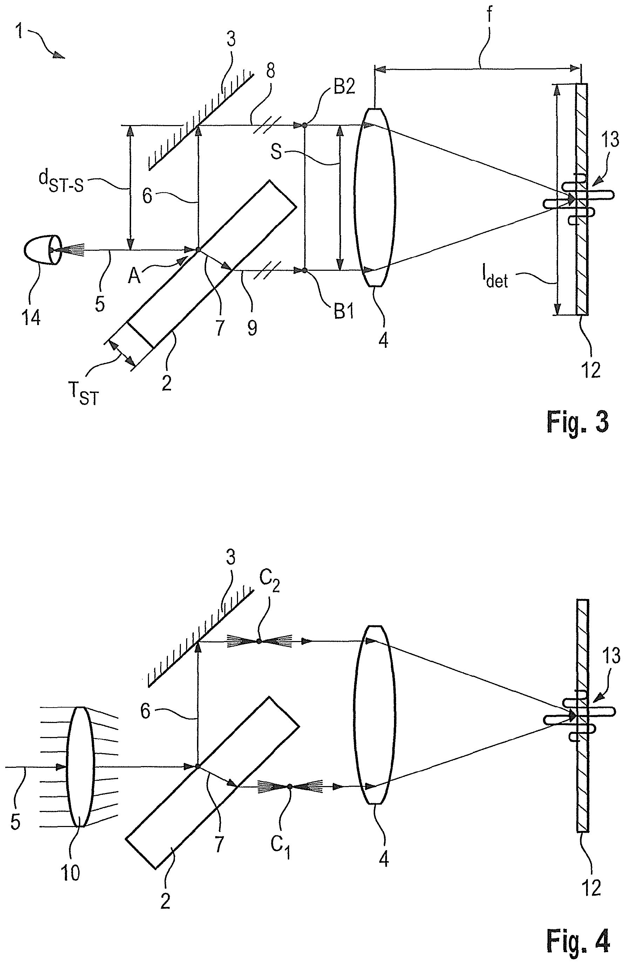

Figur 3 zeigt ein statisches Fourier-Transformations-Spektrometer 1 gemäß einem ersten Ausführungsbeispiel der Erfindung. Wie in den Figuren 1 und 2 sind die unkollimierten Lichtstrahlen im Aufbau lediglich durch den jeweiligen Brennpunktstrahl illustriert. Das statische Fourier-Transformations-Spektrometer 1 umfasst einen Strahlteiler 2, eine Spiegelvorrichtung 3 und eine Sammeloptik 4. Die Spiegelvorrichtung 3 umfasst insbesondere einen Spiegel. Außerdem weist das statische Fourier-Transformations-Spektrometer 1 einen Zeilendetektor 12 auf. Alternativ zu dem Zeilendetektor 12 ist insbesondere auch ein Flächendetektor oder ein Punktdetektor verwendbar.

Ein Eingangslichtstrahl 5, der von einer Lichtquelle 14 ausgesandt wird, wird als spektral aufzulösender unkollimierter Lichtstrahl am Punkt ***A*** auf den Strahlteiler 2 geführt, der die Tiefe ***T**_{ST}* und den Brechungsindex ***n**_{ST}* aufweist, und von diesem in zwei Teilstrahlen aufgespalten. Somit entsteht ein erster Arm 6 und ein zweiter Arm 7. Das Material des Strahlteilers 2 ist so gewählt, dass es einen größeren Brechungsindex als die Umgebung aufweist. Es gilt ***n**_{ST}* > ***n**_{L},* wobei ***n**_{L}* den Brechungsindex der Umgebung darstellt.

Der vom Strahlteiler 2 nach oben reflektierte Teilstrahl, d.h. der erste Arm 6, wird über die Spiegelvorrichtung 3 um 90° nach rechts zum Punkt ***B**₂* geleitet. Der vom Strahlteiler 2 transmittierte Strahl, d.h. der zweite Arm 7, verlässt den Strahlteiler 2 etwas nach unten versetzt in Richtung Punkt ***B₁***. Dabei ist die Spiegelvorrichtung 3 so auszurichten, dass ein erster geradliniger Abschnitt 8 des ersten Arms 6, der sich von der Spiegelvorrichtung 3 zu der Sammeloptik 4 erstreckt und ein zweiter geradliniger Abschnitt 9 des zweiten Arms 7, der sich von dem Strahlteiler 2 zu der Sammeloptik 4 erstreckt, parallel zueinander Richtung Sammeloptik 4 zeigen. Die Punkte ***B₁*** und ***B₂*** weisen den gleichen horizontalen Abstand zur Sammeloptik 4 auf. Die Sammeloptik 4 umfasst bevorzugt eine Konvexlinse und führt den ersten Arm 6 und den zweiten Arm 7 zu einer Interferenz 13 auf dem Zeilendetektor 12 zusammen.

Durch die Sammeloptik 4, insbesondere durch die Konvexlinse, werden beide Teilstrahlen somit auf dem Zeilendetektor 12 zur Interferenz 13 gebracht, dessen Entfernung zur Sammeloptik 4 genau die Brennweite ***f*** der Konvexlinse beträgt. Das dabei am Zeilendetektor 12 erzeugte Interferogramm wird anschließend durch eine Fourier-Transformation in das Spektrum des in die Erfindung einfallenden Eingangslichtstrahls 5 umgewandelt. Die Sammeloptik 4 weist bevorzugt eine Brennweite von 50 Millimetern auf.

Aufgrund des höheren Brechungsindex des Strahlteilers ***nₛₜ*** im Vergleich zu dem der Umgebung ***n_{L}*** ist die Phasengeschwindigkeit des Lichtstrahls im Strahlteiler 2 vermindert. Damit entspricht die optische Weglänge des Pfades von ***A nach B₁*** nicht mehr seiner geometrischen Länge: Mit steigendem Brechungsindex und steigender Tiefe des Strahlteilers erhöht sich der Abstand zwischen optischer und geometrischer Weglänge auf dem Pfad von ***A nach B₁.*** Die im Infrarot häufig verwendeten Materialien Zinkselenid (ZnSe) und Germanium (Ge) weisen mit Brechungsindizes von etwa 2,4 für ZnSe und etwa 4 für Ge hohe Differenzen zum Brechungsindex der Umgebungsluft von etwa 1 auf, so dass große Unterschiede zwischen optischer und geometrischer Weglänge auf dem Pfad von ***A nach B₁*** generiert werden können. Somit besteht lediglich auf dem zweiten Arm 7 im Vakuum ein Unterschied zwischen optischer und geometrischer Weglänge. Sollte der zweite Arm 7 durch Umgebungsluft verlaufen, so entsteht nur auf dem zweiten Arm 7 ein nennenswerter Unterschied zwischen optischer und geometrischer Weglänge.

In dem statischen Fourier-Transformations-Spektrometer 1 ist der vertikale Abstand zwischen Strahlteiler 2 und Spiegel ***d_{ST-S}*** so gewählt, dass unter Berücksichtigung der Tiefe ***T_{ST}*** und des Brechungsindex des Strahlteilers ***n_{ST}*** die optischen Weglängen der Pfade von ***A nach B₁*** und von ***A*** nach ***B₂*** identisch sind. So gelingt es, das Interferogramm symmetrisch um die Pfaddifferenz von Null (engl. Zero Path Difference, ZPD) auf dem Zeilendetektor 12 darzustellen. Zudem kann durch leichte Variation des vertikalen Abstands zwischen Strahlteiler 2 und Spiegel ***d_{ST-S}*** das Interferogramm ohne Lichtverlust auf dem Zeilendetektor 12 verschoben werden, so dass eine einseitige Darstellung des Interferogramms um die Zero Path Difference ohne Verlust von Lichtleistung möglich wird.

Für einen möglichst großen Lichtdurchsatz ist die unkollimierte Lichtquelle 14 möglichst nah an den Strahlteiler 2 heranzuführen, um einen möglichst großen Lichtkegel ohne Kollision mit den Engstellen des statischen Fourier-Transformations-Spektrometer 1, zwischen Strahlteiler 2 und Spiegelvorrichtung 3, zur Sammeloptik 4 führen zu können. Dies bereitet vor allem dann Schwierigkeiten, wenn kein Lichtwellenleiter als Lichtquelle 14 verwendet wird. Eine Möglichkeit, dieser Problematik zu begegnen, findet sich im zweiten Ausführungsbeispiel.

Ist die Parallelität der beiden Teilstrahlen, d.h. des ersten gradlinigen Abschnitts 8 und des zweiten gradlinigen Abschnitts 9, vor der Sammeloptik 4 erfindungsgemäß sichergestellt, weist die vorgestellte Erfindung keine Abhängigkeiten zwischen der Abstrahlfläche der Lichtquelle 14 und der Sichtbarkeit des Interferogramms auf. Dies ist vor allem im mittleren Infrarotbereich relevant, da hier in der Regel schwarze Strahler als Lichtquellen 14 eingesetzt werden, die eine relativ
geringe Leistungsdichte im mittleren Infrarotbereich aufweisen. Die für aktuelle Zeilendetektoren 12 notwendigen Lichtleistungen können deshalb meist nur durch Lichtquellen 14 mit großen Abstrahlflächen erzeugt werden.

Je größer die Abstrahlflächen der Lichtquellen 14 am Eingang der Anordnung jedoch ausfallen, desto geringere Abweichungen von der Parallelität der beiden Teilstrahlen sind erlaubt, um eine ausreichende Sichtbarkeit des Interferogramms nicht zu gefährden. Da die Parallelität durch den Winkel der Spiegelvorrichtung 3 bestimmt wird, zwingen größere Abstrahlflächen zur exakteren Justierung der Spiegelvorrichtung 3. Es sei jedoch darauf hingewiesen, dass in der Praxis relevante Abstrahlflächen von mehreren Millimetern Durchmesser noch keine großen Justierprobleme nach sich ziehen. Dadurch, dass bei dem statischen Fourier-Transformations-Spektrometer 1 lediglich eine Spiegelvorrichtung 3 zu justieren ist, erweist sich die Erfindung als wesentlich leichter zu justieren als das im Stand der Technik vorgestellte statische modifizierte Mach-Zehnder Interferometer (vgl. Figur 2), bei dem eine Justierung von drei Spiegeln nötig ist.

Die spektrale Auflösung der vorgestellten Erfindung steht wie bei allen auf Fourier-Transformation basierenden Spektrometern in einem reziproken Verhältnis zu der vom Aufbau maximal erzeugbaren Weglängendifferenz. Diese Weglängendifferenz ist abhängig vom Abstand der beiden parallelen Teilstrahlen s, von der Brennweite der Linse ***f*** und von der Länge des Zeilendetektors ***I_{det}*.** Dabei kann der Abstand der Teilstrahlen ***s*** über die Charakteristik des Strahlteilers, d.h. Tiefe ***T_{ST}*** und Brechungsindex ***n_{ST},*** und die Brennweite ***f*** über die Linseneigenschaften variiert werden. Praxisnahe Werte für ***f***, wie insbesondere 50 mm, für ***s***, wie insbesondere 6 mm, und für ***I_{det}*,** wie insbesondere 12,8 mm, lassen eine gute Miniaturisierung der Erfindung zu.

Dadurch, dass durch den Einsatz eines Zeilendetektors 12 mit endlicher Pixelzahl die Anzahl der Abtastpunkte im Interferogramm beschränkt ist, muss die spektrale Bandbreite des zu analysierenden Lichts eingeschränkt werden, um das Shannon-Nyquist-Kriterium nicht zu verletzen. Da der Abstand der Abtastpunkte von der maximal am Detektor anliegenden Weglängendifferenz und damit von der spektralen Auflösung der Anordnung abhängt, muss bei der Konstruktion ausgehend von der verfügbaren Pixelanzahl ein Kompromiss zwischen spektraler Bandbreite und Auflösung getroffen werden.

Bei dem statischen Fourier-Transformations-Spektrometer 1 durchläuft das eingekoppelte Licht jedes optische Element lediglich einmal, so dass ein geringer Lichtverlust sichergestellt ist. Dagegen weist zum Beispiel das auch im mittleren Infrarot einsetzbare common-path Interferometer (vgl. Figur 1) prinzipbedingt einen Lichtverlust von mindestens 50% auf, da die Hälfte der Lichtleistung beim zweiten Durchgang des Lichts durch den Strahlteiler 2 ausgekoppelt wird.

Wegen des einmaligen Durchgangs des Lichts durch den Strahlteiler 2 entsteht am Zeilendetektor 12 ein wellenlängenabhängiger Phasenversatz zwischen beiden Teilstrahlen, da der Brechungsindex des Strahlteilers eine Wellenlängenabhängigkeit aufweist. Bei Überlagerung der Interferenzeffekte bei verschiedenen Wellenlängen zeigt das daraus entstehende Interferogramm aufgrund der genannten Abhängigkeit des Phasenversatzes von der Wellenlänge einen deutlich abgeflachten Mittenpeak bei der Pfaddifferenz von Null. Dadurch sinken die Ansprüche an den Detektor im Hinblick auf seine Dynamik, während sich die anschließende algorithmische Korrektur des Spektrums anspruchsvoller gestaltet.

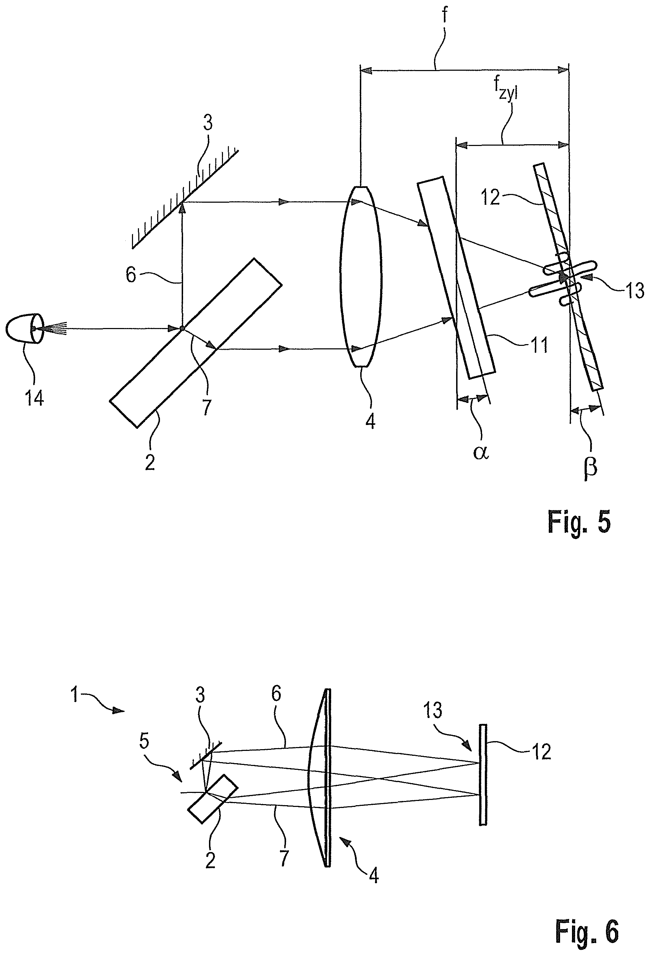

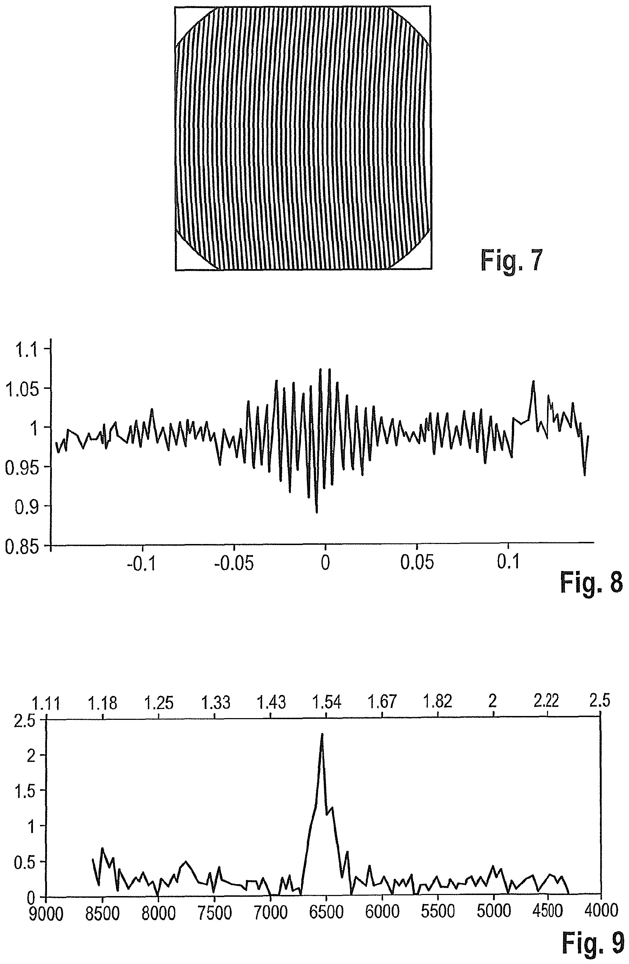

Fig. 6 zeigt das statische Fourier-Transformations-Spektrometer 1 aus Figur 3 während eines Versuchs. Dabei wurde das in Figur 7 dargestellte Detektorbild erhalten. Es lassen sich die für eine monochromatische Lichtquelle erwarteten Interferenzstreifen deutlich erkennen, wobei die Streifen etwas gekrümmt erscheinen. Dieser Effekt ist darin begründet, dass beide Teilstrahlen zwar die gleiche optische, aber eine andere geometrische Weglänge bis zur Sammeloptik 4 zurücklegen. Wird ein Zeilendetektor 12 verwendet, vermindert dieser Effekt die Sichtbarkeit des Interferogramms aufgrund der meist geringen Detektorbreiten nur wenig. Soll jedoch der gesamte Querschnitt beider Teilstrahlen zur Erhöhung des Lichtdurchsatzes auf den Zeilendetektor 12 fokussiert werden, stellt dieser Effekt ein Problem dar. Eine Lösungsmöglichkeit hierfür wird im zweiten Ausführungsbeispiel dargestellt.

In einem weiteren Versuch wurde eine amplified spontaneous emission light source (ASE) als zu vermessende Lichtquelle 14 gewählt. Diese Lichtquelle mit geringer Kohärenzlänge umfasst einen Wellenlängenbereich von etwa 1525 nm bis 1565 nm - das sogenannte C-Band - und weist eine sehr große Leistungsdichte auf. Als Zeilendetektor 12 kam ein 256 Pixel umfassender PbS-Zeilendetektor zum Einsatz, während als Strahlteiler 2 ein ZnSe-Strahlteiler mit einer Tiefe von 3 mm verwendet wurde.

Die geringe Anzahl an Detektorpixeln im Vergleich zum niedrigen Wellenlängenbereich der Lichtquelle 14 machte bei diesem Versuch die Verwendung einer Konvexlinse mit einer Brennweite von 300 mm als Sammeloptik 4 nötig, um das Nyquist-Shannon-Theorem nicht zu verletzen. Die hohe Brennweite der Konvexlinse verringerte die maximale Weglängendifferenz am Zeilendetektor 12 und damit den Abstand der Abtastpunkte im Interferogramm auf ein erlaubtes Maß, wodurch jedoch letztlich nur eine sehr geringe spektrale Auflösung erreicht werden konnte. Figur 8 zeigt das bei diesem Versuch aufgenommene Interferogramm, wobei die Abszissenachse eine optische Weglängendifferenz in Millimetern darstellt, während über der Ordinatenachse eine normierte Intensität aufgetragen ist. Figur 9 zeigt das daraus berechnete Spektrum, wobei die untere Abszissenachse eine Wellenzahl in 1/cm und die obere Abszissenachse die korrespondierenden Wellenlängen in µm zeigt, während auf der Ordinatenachse die normierte Intensität aufgetragen ist.

Aus Figur 8 und 9 lässt sich erkennen, dass mit der vorgestellten Erfindung Licht mit geringer Kohärenzlänge auf einem Zeilendetektor 12 zu einer sichtbaren Interferenz gebracht werden kann. Dabei gelingt auch eine beliebige Positionierung der Zero Path Difference auf dem Zeilendetektor 12, wobei hier eine mittige Position gewählt wurde. Das berechnete Spektrum deckt sich mit dem von der Lichtquelle ausgesendeten Wellenlängenbereich, so dass die Funktionsweise der vorgestellten Erfindung als Spektrometer gezeigt wurde.

### Zweites Ausführungsbeispiel: Brennpunktverschiebung mittels Konvexlinse

Zuvor wurde die Notwendigkeit einer nahen Positionierung der Lichtquelle 14 am Strahlteiler 2 zur Sicherstellung eines hohen Lichtdurchsatzes erwähnt. Da dies in vielen Fällen zu Problemen führt, beschreibt das im Folgenden dargestellte zweite Ausführungsbeispiel eine Möglichkeit, durch den Einsatz einer Vorschaltoptik 10 kollimierte Strahlung von weiter entfernten Lichtquellen 14 bei gleichzeitig verbessertem Lichtdurchsatz spektral zu vermessen. Die Vorschaltoptik 10 umfasst insbesondere eine zweite Linse. Figur 4 zeigt das zweite Ausführungsbeispiel der Erfindung, was dem ersten Ausführungsbeispiel mit zusätzlicher Linse entspricht.

Steht bei einer Anwendung annähernd kollimiertes Licht aus der spektral zu vermessenden Lichtquelle 14 zur Verfügung, kann am Eingang des Aufbaus eine weitere Konvexlinse als Vorschaltoptik 10 angebracht werden. Diese bündelt das einstrahlende Licht zu einem neuen Brennpunkt. Dieser Brennpunkt bildet die in Figur 3 dargestellte unkollimierte Lichtquelle 14 der ursprünglichen Erfindungsskizze nach.

Erzeugt man nun jedoch durch Platzierung der ersten Konvexlinse den neuen Brennpunkt hinter dem Strahlteiler 2, werden durch die Aufteilung des Lichts am Strahlteiler 2 aus einem Brennpunkt die zwei Brennpunkte ***C₁*** und ***C₂*.** Die Positionierung dieser beiden Brennpunkte kann so vorgenommen werden, dass durch Vermeidung der Engstellen in der Erfindung ein möglichst großer Lichtkegel kollisionsfrei durch die Erfindung gelenkt werden kann. Es erhöhen sich somit der Lichtdurchsatz und damit das Signal-Rausch-Verhältnis des statischen Fourier-Transformations-Spektrometers 1.

Die beiden Konvexlinsen der Vorschaltoptik 10 und der Sammeloptik 4 können zudem durch off-axis Konkavspiegel ersetzt werden, ohne die Funktionsweise der Erfindung gemäß dem zweiten Ausführungsbeispiel zu verändern. Dadurch werden Lichtverlust und Wellenlängenabhängigkeit der Erfindung vermindert, da Konkavspiegel einen geringeren Lichtverlust und eine geringere Wellenlängenabhängigkeit als Konvexlinsen aufweisen.

### Drittes Ausführungsbeispiel: Lichtbündelung durch Zylinderlinse

Durch die Verwendung einer Konvexlinse als Sammeloptik 4 zur Erzeugung der Interferenz 13 wird die Interferenzerscheinung in der Ebene des Zeilendetektors 12 grundsätzlich auf eine Fläche projiziert, deren Seitenlänge mindestens der Länge des Zeilendetektors 12 entsprechen muss. Dieser Effekt ist in Figur 7 gezeigt. Da die heute erhältlichen Zeilendetektoren 12 meist eine sehr geringe Höhe von etwa 500 µm aufweisen, kann ein Großteil des Interferenzeffekts nicht vom Zeilendetektor 12 aufgenommen werden. Es kommt zu einem Verlust an Lichtleistung.

Durch die Verwendung einer Zylinderlinse als Nachschaltoptik 11 ist es jedoch möglich, die Dimension senkrecht zum Verlauf des Zeilendetektors 12 auf den Zeilendetektor 12 zu fokussieren und so den Lichtverlust deutlich zu minimieren. Da bei der vorgestellten Erfindung gleiche Weglängendifferenzen senkrecht vom Zeilendetektor 12 nicht linear, sondern gekrümmt verlaufen, würde ein einfaches Einsetzen einer Zylinderlinse als Nachschaltoptik 11 in den Strahlengang zu einer Kombination nahe beieinander liegender Weglängendifferenzen und damit zu einem deutlichen Verwaschen des Interferogramms führen. Es hat sich allerdings überraschend gezeigt, dass dieser Effekt durch ein Drehen von Nachschaltoptik 11 und Zeilendetektor 13 wesentlich verringert wird. Figur 5 stellt einen solchen Einsatz einer Zylinderlinse dar.

Die Zylinderlinse wird zwischen Sammeloptik 4 und Zeilendetektor 12 so platziert, dass der Zeilendetektor 12 genau in der Brennweite der Zylinderlinse ***f_{zyl}*** liegt. Nun wird die Zylinderlinse um genau den Winkel ***α*** gedreht, der den genannten Effekt des Verwaschens des Interferogramms minimiert. Die Zylinderachse der Zylinderlinse verläuft hierbei parallel zur Papierebene, so dass die Zylinderlinse das einfallende Licht entlang des Zeilendetektors 12 fokussieren kann. Anschließend erfährt der Zeilendetektor 12 eine Drehung um genau den Winkel ***β*,** der zu einer optimalen Fokussierung des Interferogramms auf den Zeilendetektor 12 führt. Die optimalen Winkel ***α*** und ***β*** sind dabei abhängig von der Geometrie der Erfindung und damit unter anderem von der Beschaffenheit des Strahlteilers 2 und der Sammeloptik 4.

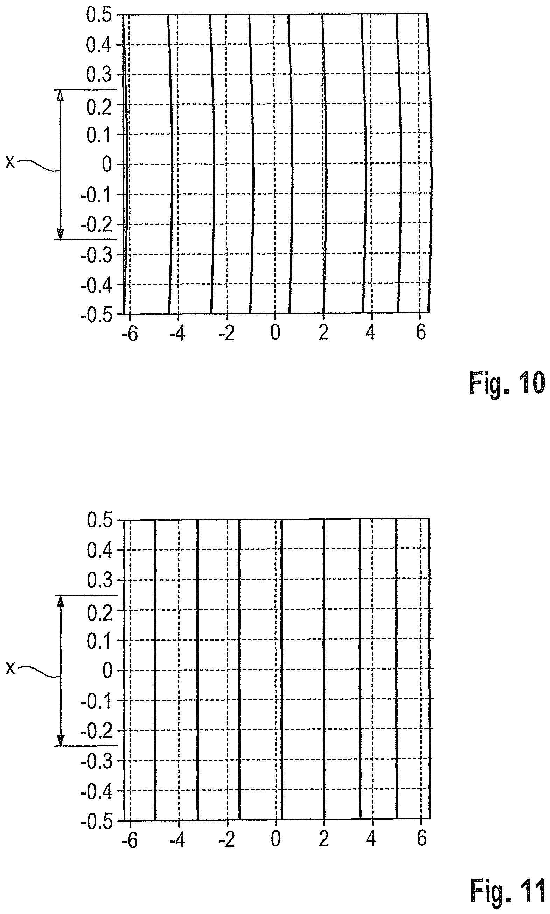

Figur 10 zeigt die Konturlinien des Weglängendifferenzenverlaufs bei einer nicht gedrehten Zylinderlinse, während Figur 11 den Verlauf bei einer um ***α*** gedrehten Zylinderlinse darstellt. In beiden Fällen zeigt die Abszissenachse und die Ordinatenachse eine jeweilige Detektorposition in Millimetern. Der Zeilendetektor 12 wurde dabei jeweils um den passenden Winkel ***β*** gedreht. Vergleicht man die beiden Abbildungen, lässt sich erkennen, dass eine um ***α*** gedrehte Zylinderlinse die Krümmung des Weglängendifferenzenverlaufs minimiert und wieder an einen annähernd linearen Verlauf heranführt. So gelingen ein Bündeln des Interferogramms auf dem Zeilendetektor und damit eine Verringerung des Lichtverlusts in der Erfindung bei weiterhin guter Sichtbarkeit des Interferogramms. In Figuren 10 und 11 ist außerdem eine jeweilige Pixelhöhe x beispielhaft mit 500 Mikrometern gezeigt.

Als Alternative zu einer gedrehten Zylinderlinse als Nachschaltoptik 11 können auch an die jeweilige Anordnung adaptierter Optiken wie z. B. angepasste Konkavspiegel angebracht werden, um den Lichtverlust in der Anordnung weiter zu verringern.

### Viertes Ausführungsbeispiel: Abbildende Spektrometervariante

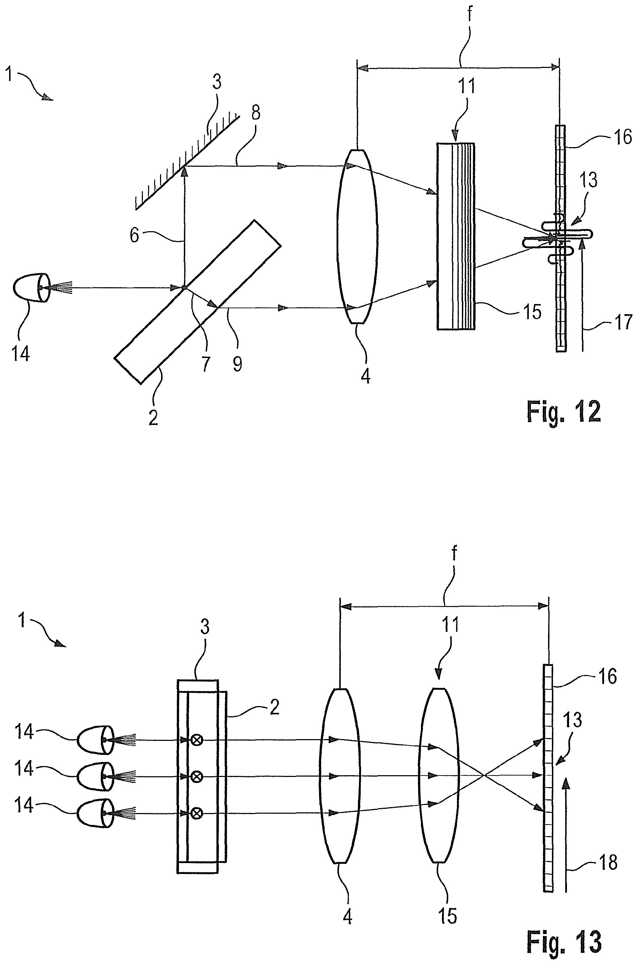

In den Figuren 12 und 13 ist ein viertes Ausführungsbeispiel des erfindungsgemäßen statischen Fourier-Transformations-Spektrometers dargestellt. In dem vierten Ausführungsbeispiel wird ein Array-Flächendetektor 16 verwendet. Figur 12 zeigt eine Ansicht des statischen Fourier-Transformations-Spektrometers 1 derart, dass eine erste Dimension 17 des Array-Flächendetektors 16 gezeigt ist. Figur 13 zeigt eine Ansicht, in der eine zweite Dimension 18 des Array-Flächendetektors 16 dargestellt ist.

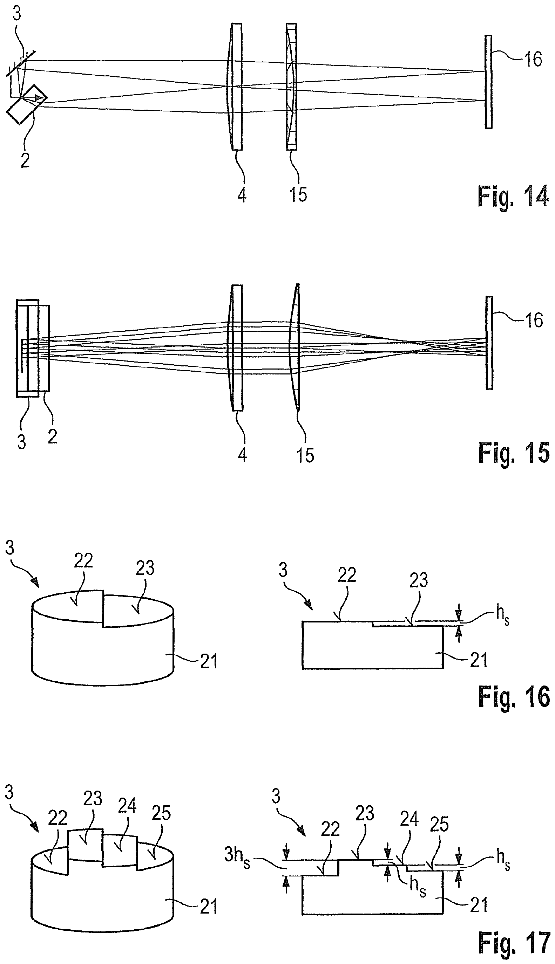

Ebenso zeigen die Figuren 14 und 15 das statische Fourier-Transformations-Spektrometer 1 im Betrieb, wobei die Ansicht von Figur 14 der Ansicht von Figur 12 entspricht, während die Ansicht von Figur 15 der Ansicht von Figur 13 entspricht.

Der grundlegende Aufbau des statischen Fourier-Transformations-Spektrometers 1 entspricht dem des ersten Ausführungsbeispiels. Allerdings wird anstatt des Zeilendetektors 12 ein Array-Flächendetektor 16 verwendet, mit dem eine Detektion von Licht in zwei Dimensionen 17, 18 ermöglicht ist. Außerdem ist zusätzlich eine Zylinderlinse 15 vorhanden, die als Nachschaltoptik 11 fungiert. Durch die Zylinderlinse 15 zusammen mit der Sammeloptik 4 wird auf dem Array-Flächendetektor 16 eine zeilenförmige Reihe von Lichtquellen 14 auf die zweite Dimension 18 des Array-Flächendetektors 16 abgebildet, wobei zusätzlich die spektrale Information ortsaufgelöst entlang dieser Reihe vermessen wird. Auf diese Weise ist das statische Fourier-Transformations-Spektrometer 1 ein hyperspektales Spektrometer. Durch die unterschiedlichen geometrischen Wege des ersten Arms 6 und des zweiten Arms 7 ist die Ortsauflösung begrenzt.

Aus Figur 12 ist ersichtlich, dass die Zylinderachse der Zylinderlinse 15 parallel zu der Zeichenebene verläuft. In der in Figur 12 gezeigten Ebene hat die Zylinderlinse 15 also keinen Einfluss auf den Strahlengang. Der Array-Flächendetektor 16 ist in der Brennebene der Sammeloptik 4 positioniert. Als Sammeloptik 4 kann wiederum eine Konvexlinse oder ein off-axis Konkavspiegel dienen.

Die Zylinderlinse 15 bewirkt in der in Figur 13 gezeigten zweiten Dimension 18 eine Abbildung einer Reihe von Lichtquellen 14 auf den Array-Flächendetektor 16. Dabei ist die Sammeloptik 4 optimalerweise eine Konvexlinse, so dass in dieser Dimension ein Linsensystem entsteht. Alternativ kann statt einer Konvexlinse auch eine weitere Zylinderlinse für die Sammeloptik 4 verwendet werden, die um 90° gegenüber der Zylinderlinse 15 gedreht ist. In diesem Fall wird eine Abstimmung der Brennweite und Position der Zylinderlinse 15 im Bezug auf eine Brennweite der Sammeloptik 4 vermieden.

Die Figuren 14 und 15 zeigen das statische Fourier-Transformations-Spektrometer 1 gemäß dem vierten Ausführungsbeispiel in Betrieb. Auf dem Array-Flächendetektor 16 lassen sich dann insbesondere gekrümmte Verläufe der einzelnen Interferogramme, d.h. der Abbildungen der Interferenzen 13, erkennen. Dabei ist ein Überlappen der Interferrogramme einzelner Lichtquellen 14 vorteilhafterweise zu vermeiden. Dies ist insbesondere durch zusätzliche Abbildungssysteme vor dem statischen Fourier-Transformations-Spektrometers 1 oder durch Verwenden mehrerer Glasfasereingänge als Lichtquellen 14 zu erreichen. Mit dem statischen Fourier-Transformations-Spektrometer 1 gemäß dem vierten Ausführungsbeispiel lassen sich somit mehrere Orte simultan spektral vermessen. Dabei ist die Sichtbarkeit der Interferrogramme auch nicht von der Abstrahlfläche der Lichtquellen 14 abhängig.

### Fünftes und sechstes Ausführungsbeispiel: Auflösungserhöhung durch Stufenspiegel

Figur 16 zeigt schematisch eine Spiegelvorrichtung 3 eines statischen Fourier-Transformations-Spektrometers 1 gemäß einem fünften Ausführungsbeispiel. Die Spiegelvorrichtung 3 umfasst einen Stufenspiegel 21, dessen Stufen für eine konstante Verschiebung der Pfaddifferenzen im Vergleich zu einer planen Spiegelvorrichtung 3 sorgen. Im Idealfall sind die Stufenhöhen dabei so gewählt, dass sie zu einem perfekten Übergang zwischen den einzelnen Pfaddifferenzbereichen führen. In der Praxis sollte jedoch eine leichte Überlappung der Pfaddifferenzbereiche und damit eine etwas geringerer Stufenhöhe angestrebt werden, so dass eine leichtere algorithmische Korrektur und ein robusterer Betrieb des statischen Fourier-Transformations-Spektrometers 1 möglich wird.

Der Stufenspiegel 3 des statischen Fourier-Transformations-Spektrometers 1 gemäß dem fünften Ausführungsbeispiel umfasst, wie in Figur 16 dargestellt, zwei Spiegeloberflächen, eine erste Spiegeloberfläche 22 und eine zweite Spiegeloberfläche 23, die abgestuft sind. In Figur 17 ist ein Stufenspiegel 3 eines statischen Fourier-Transformations-Spektrometers 1 gemäß einem sechsten Ausführungsbeispiel gezeigt, der vier Spiegeloberfläche, eine erste Spiegeloberfläche 22, eine zweite Spiegeloberfläche 23, eine dritte Spiegeloberfläche 24 und eine vierte Spiegeloberfläche 25, die ebenfalls abgestuft sind, aufweist. Die Stufen weisen jeweils ein ganzzahliges Vielfaches einer vordefinierten Stufenhöhe **hₛ** als Abstand zueinander auf. Dabei ist vorgesehen, dass jedes ganzzahliges Vielfaches nur einmal vorhanden ist, sodass keine Spiegeloberflächen 22, 23, 24, 25 auf derselben Ebene vorhanden sind. Außerdem ist eine hochwertige Parallelität der Stufen vorhanden. Die nötige Parallelität ist mit Hilfe von Präzisionsfräsverfahren leicht und kostengünstig zu erreichen.

In Figur 16 ist die erste Spiegeloberfläche 22 um die einfache Stufenhöhe **hₛ** von der zweiten Spiegeloberfläche 23 beabstandet. In Figur 17 ist die erste Spiegeloberfläche 22 von der zweiten Spiegeloberfläche 23 um die dreifache Stufenhöhe **hₛ** beabstandet, von der dritten Spiegeloberfläche 24 um die zweifache Stufenhöhe **hₛ** und von der vierten Spiegeloberfläche 25 um die einfache Stufenhöhe **hₛ.** Somit weisen jeweils die zweite Spiegeloberfläche 23 und die dritte Spiegeloberfläche 24, sowie die dritte Spiegeloberfläche 24 und die vierte Spiegeloberfläche 25 einen Abstand von jeweils der einfachen Stufenhöhe **hₛ** auf.

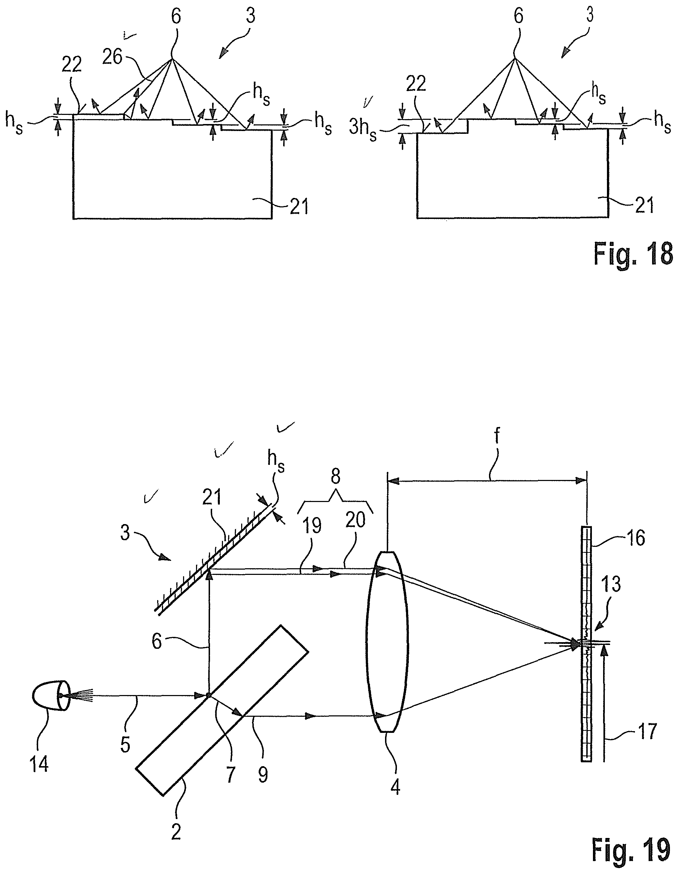

Figur 19 zeigt schematisch ein statisches Fourier-Transformations-Spektrometer 1 gemäß dem fünften Ausführungsbeispiel der Erfindung. Dabei entspricht der grundsätzliche Aufbau demjenigen des ersten Ausführungsbeispiels. Lediglich die Spiegelvorrichtung 3 weist im Unterschied zu dem ersten Ausführungsbeispiel den Stufenspiegel 21 auf. Der Stufenspiegel 21 wird außerdem bevorzugt in Kombination mit dem Array-Flächendetektor 16 in dem statischen Fourier-Transformations-Spektrometer 1 verwendet. Der Array-Flächendetektor 16 ist insbesondere identisch zu dem des vierten Ausführungsbeispiels. Alternativ zu dem Array-Flächendetektor 16 können andere Techniken verwendet werden, die eine zweidimensionale Abtastung der Interferenz 13 erlauben. Aufgrund der hohen Leistungsfähigkeit bei geringen Kosten von Array-Flächendetektoren 16, insbesondere im Infrarotbereich, und der Strahlcharakteristik des statischen Fourier-Transformations-Spektrometers 1 gemäß dem fünften Ausführungsbeispiel in der Ebene des Array-Flächendetektors 16 ist eine Umsetzung des statischen Fourier-Transformations-Spektrometers 1 gemäß dem fünften Ausführungsbeispiel ohne großen Mehraufwand möglich. Bevorzugt ist in der Dimension senkrecht zur Papierebene die Quellengröße der Lichtquelle 14 durch entsprechendes Lichtquellendesign oder mit Hilfe einer Blende so einzuschränken, dass die räumliche Kohärenz am Array-Flächendetektor 16 sichergestellt ist.

Da die Spiegelvorrichtung 3 als Stufenspiegel 21 eine erste Spiegeloberfläche 22 und eine zweite Spiegeloberfläche 23 aufweist, ist der erste geradlinige Abschnitt 8, der durch Reflexion des ersten Arms 6 an der Spiegelvorrichtung 3 entsteht, in einen ersten Teilabschnitt 19 und in einen zweiten Teilabschnitt 20 aufgeteilt. Da die erste Spiegeloberfläche 22 und die zweite Spiegeloberfläche einen Abstand von einer einfachen Stufenhöhe **hₛ** zueinander aufweisen, ist die jeweilige resultierende optische Pfaddifferenz aus dem ersten Teilabschnitt 19 und aus dem zweiten Teilabschnitt 20 unterschiedlich. Dies ist von dem Array-Flächendetektor 16 erkennbar, sodass ein rechnerisches Zusammenführen durchgeführt werden kann. Auf diese Weise ist die gesamte Pfaddifferenz des statischen Fourier-Transformations-Spektrometers erhöht.

Der Array-Flächendetektor 16 ist in mehrere Abschnitte aufgeteilt, die jeweils andere optische Pfaddifferenzen abbilden. Die Pfaddifferenzen der einzelnen Abschnitte überschneiden sich im Idealfall nicht oder nur gering, so dass sich durch algorithmische Kombination der einzelnen Abschnitte ein einzelnes zusammenhängendes Interferogramm mit einem deutlich höheren Pfaddifferenzbereich ergibt. Jeder der einzelnen Abschnitte ist einer der Spiegeloberflächen 22, 23, 24, 25 zugeordnet, sodass aufgrund der Abstufung des Stufenspiegels 21 verschiedene Pfaddifferenzen auf den Abschnitten abgebildet werden.

Zwischen maximaler Pfaddifferenz eines Interferogramms und der spektralen Auflösung des dazugehörigen Spektrums besteht ein reziprokes Verhältnis, sodass die spektrale Auflösung des resultierenden Spektrums deutlich erhöht werden kann. Im Idealfall wird durch jeden Abschnitt die maximale Pfaddifferenz des Interferogramms um die ursprüngliche Pfaddifferenz erhöht. So sorgen zwei Abschnitte für eine Verdopplung der maximalen optischen Pfaddifferenz und damit für eine Halbierung der spektralen Auflösung im Vergleich zu einem identischen Spektrometerdesign ohne Stufenspiegel 21. Vier Abschnitte führen zu einer Vervierfachung der Pfaddifferenz und zu einem Vierteln der spektralen Auflösung.

Bei mehr als zwei Spiegeloberflächen 22, 23, 24, 25 ist die Anordnung der Spiegeloberflächen 22, 23, 24, 25 bevorzugt so gewählt, dass störende Reflexionen an den Stufenwänden der Spiegeloberflächen 22, 23, 24, 25 vermieden werden. Solche Reflexionen führen zu nicht oder fehlerhaft beleuchteten Abschnitten am Array-Flächendetektor 16. Da das Interferogramm am Ende algorithmisch aus den einzelnen Pfaddifferenzabschnitten zusammengesetzt wird, ist die Anordnung der Spiegeloberflächen 22, 23, 24, 25 beliebig, so dass störende Reflexionen prinzipiell vermieden werden können.

In Figur 18 ist auf der linken Seite eine nachteilige Anordnung und auf der rechten Seite eine vorteilhafte Ausgestaltung des Stufenspiegels des statischen Fourier-Transformations-Spektrometers 1 gemäß dem sechsten Ausführungsbeispiel gezeigt. Ausgehend von dem ersten Arm 6 trifft das Licht der Lichtquelle 14 auf die erste Spiegeloberfläche 22, die zweite Spiegeloberfläche 23, die dritte Spiegeloberfläche 24 sowie die vierte Spiegeloberfläche 25. Aus der linken Abbildung ist eine treppenförmige Ausgestaltung ersichtlich. Bei dieser ergibt sich eine störende Reflexion 26 an der Stufenwand der ersten Spiegeloberfläche 22. Aus der rechten Abbildung hingegen ist eine konvexe Form des Stufenspiegels 21 ersichtlich. Hierbei ist keinerlei störende Reflexion vorhanden, sodass die konvexe Form vorteilhaft ist. Wie zuvor beschrieben ist eine Reihenfolge bei der Abstufung der einzelnen Spiegeloberflächen 22, 23, 24, 25 unerheblich.

Werden in der Anordnung Lichtquellen 14 verwendet, die eine endliche Ausdehnung in der Dimension senkrecht zu der Papierebene aufweisen, so können gleiche Abstrahlwinkel der Lichtquelle 14 an den Stufengrenzen zu unterschiedliche Pfaddifferenzen am Array-Flächendetektor 16 führen. Deshalb ist je nach Art des Array-Flächendetektors 16 und Anordnung die Dimension der Lichtquelle 14 in der Dimension senkrecht zu der Papierebene so einzuschränken, dass die räumliche Kohärenz der Interferenzerscheinungen am Array-Flächendetektor 16 sichergestellt ist.

Die Kanten der einzelnen Spiegelflächen 22, 23, 24, 25 sind wie in Figur 16 oder in Figur 17 zu sehen parallel zueinander auszurichten. Innerhalb des Fourier-Transformationsspektrometers 1 sind die Kanten der Spiegelflächen 22, 23, 24, 25 vorteilhafterweise senkrecht zu der zweiten Dimension 18 (vgl. Figur 13) des Array-Flächendetektors 16 ausgerichtet. Figur 19 zeigt die Verwendung eines Stufenspiegels 21 mit genau zwei Stufen, wie dieser insbesondere in Figur 16 dargestellt ist. So können aufgrund der beschriebenen Ausrichtung der Kanten der ersten Spiegelfläche 22 und der zweiten Spiegelfläche 23 am Array-Flächendetektor 16 entlang der zweiten Dimension 18 (vgl. Figur 13) senkrecht zu der ersten Dimension 17 verschiedene Pfaddifferenzabschnitte dargestellt werden, wobei die Pfaddifferenz jedes Abschnitts genau um die dazugehörige Stufenhöhe verschoben wird.

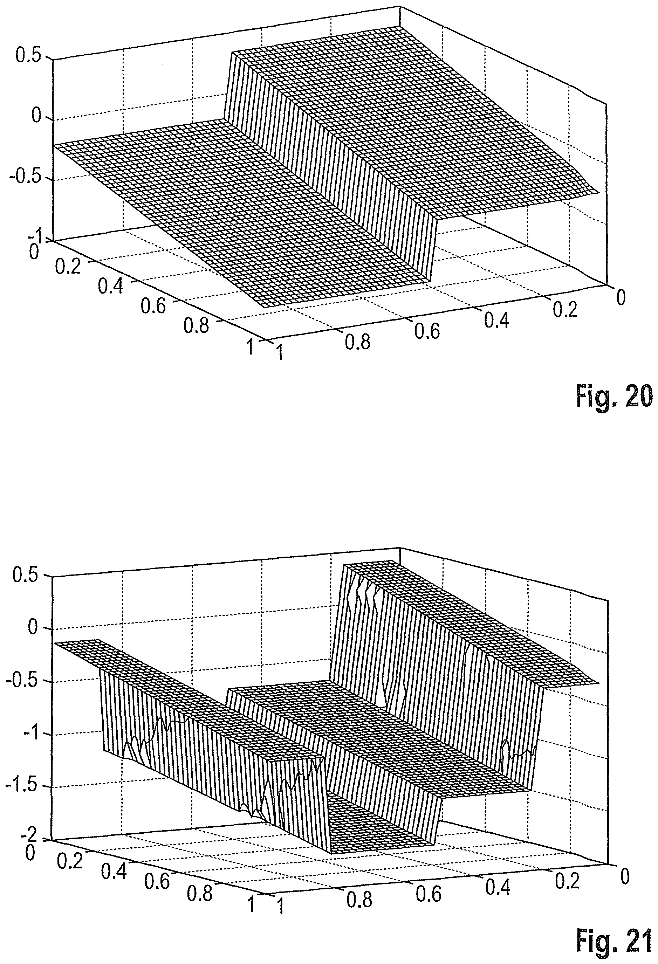

Figur 20 zeigt eine Abbildung eines mittels des Array-Flächendetektors 16 aufgezeichneten Weglängendifferenzverlaufs während des Betriebs des statischen Fourier-Transformations-Spektrometers gemäß dem fünften Ausführungsbeispiel der Erfindung. Figur 21 zeigt eine Abbildung eines mittels des Array-Flächendetektors 16 aufgezeichneten Weglängendifferenzverlaufs während des Betriebs des statischen Fourier-Transformations-Spektrometers gemäß dem sechsten Ausführungsbeispiel der Erfindung. Sowohl in Figur 20 als auch in Figur 21 repräsentieren die horizontalen Koordinatenachsen die erste Detektordimension 17 sowie die zweite Detektordimension 18, während die vertikale Koordinatenachse eine optische Pfaddifferenz in Millimetern repräsentiert.

Die stufenförmige Charakteristik der optischen Pfaddifferenzen am Array-Flächendetektor 16 lässt sich hier gut erkennen. Der Array-Flächendetektor 16 ist somit in unterschiedliche Abschnitte unterteilt, wobei jedem Abschnitt eine der Spiegeloberflächen 22, 23, 24, 25 zugeordnet ist. Werden die Abschnitte algorithmisch passend zusammengeführt, entsteht ein Interferogramm mit einer sehr hohen maximalen optischen Pfaddifferenz und damit ein Spektrum mit sehr niedriger spektraler Auflösung.

### Fazit

Als Einsatzgebiete für das neuartige Spektrometer sind vor allem spektroskopische Anwendungen unter widrigen Umweltbedingungen interessant, bei denen nur eine geringe Lichtleistung zur Verfügung steht. So können die Vorteile der Erfindung - die hohe Robustheit aufgrund des statischen Aufbaus und das hohe Signal-Rausch-Verhältnis infolge der Nutzung des Fourier-Transformations-Prinzips - besonders zur Geltung kommen. Ihre kompakte Bauform lässt zudem eine leichte Integration des vorgestellten Spektrometers in bestehende Systeme auch bei geringem Platzangebot zu. So stellt die Erfindung auch durch ihren geringen Materialbedarf und ihren einfachen Aufbau eine sehr kostengünstige Lösung für zahlreiche spektroskopische Probleme dar.

Da bei geringen Lichtleistungen lediglich Spektrometer auf Fourier-Transformations-Basis einsetzbar sind, sind als Konkurrenzsysteme zur vorgestellten Erfindung hauptsächlich zeitlich modulierende FTIR-Spektrometer zu nennen. Ist jedoch von diesen Systemen eine hohe Robustheit gefordert, muss eine komplexe Kompensationstechnik im Spektrometer integriert werden, wodurch der Marktpreis robuster zeitlich modulierender FTIR-Spektrometer deutlich über dem angestrebten Preis der Erfindung liegt. Mit dem statischen FTIR-Spektrometer von KEIT ist wie bereits im Stand der Technik vermerkt ein Spektrometer mit ähnlichem Wirkprinzip auf dem Markt, das jedoch aufgrund des zugrundeliegenden Aufbaus am Strahlteiler einen Leistungsverlust von mindestens 50 % aufweist und damit Einbußen im Hinblick auf sein Signal-Rausch-Verhältnis hinnehmen muss.

Das erfindungsgemäße statische FTIR-Spektrometer hebt sich somit in Preis und Leistungsfähigkeit von bereits am Markt verfügbaren Konkurrenzprodukten ab. Es eröffnet aufgrund seiner hohen Kompaktheit, großen Leistungsfähigkeit und seinem günstigen Preis neuartige Anwendungsgebiete für FTIR-Spektroskopie, die bis jetzt nicht wirtschaftlich darstellbar waren.

Der Einsatz eines Stufenspiegels erhöht die spektrale Auflösung des erfindungsgemäßen statischen FTIR-Spektrometers deutlich. Der Stufenspiegel ist außerdem in dem statischen FTIR-Spektrometer gemäß dem ersten, dem zweiten, und/oder dem dritten Ausführungsbeispiel der Erfindung einsetzbar. Zudem kann die konvexe Linse durch off-axis Konkavspiegel für eine wellenlängenunabhängige Fokussierung ersetzt werden.

Neben der vorstehenden schriftlichen Beschreibung der Erfindung wird zu deren ergänzender Offenbarung hiermit explizit auf die zeichnerische Darstellung der Erfindung in den Fig. 3 bis 21 Bezug genommen.

### Bezugszeichenliste

- 1: statisches Fourier-Transformations-Spektrometer
- 2: Strahlteiler
- 3: Spiegelvorrichtung
- 4: Sammeloptik
- 5: Eingangslichtstrahl
- 6: erster Arm
- 7: zweiter Arm
- 8: erster geradliniger Abschnitt
- 9: zweiter geradliniger Abschnitt
- 10: Vorschaltoptik
- 11: Nachschaltoptik
- 12: Zeilendetektor
- 13: Interferenz
- 14: Lichtquelle
- 15: Zylinderlinse
- 16: Array-Flächendetektor
- 17: Erste Dimension des Array-Flächendetektors
- 18: Zweite Dimension des Array-Flächendetektors
- 19: erster Teilabschnitt des ersten geradlinigen Abschnitts
- 20: zweiter Teilabschnitt des ersten geradlinigen Abschnitts
- 21: Stufenspiegel
- 22: erste Spiegelfläche
- 23: zweite Spiegelfläche
- 24: dritte Spiegelfläche
- 25: vierte Spiegelfläche
- 26: Reflexion

## Patentansprüche

1. Statisches Fourier-Transformations-Spektrometer (1), umfassend
• einen Strahlteiler (2),
• eine Spiegelvorrichtung (3), und
• eine Sammeloptik (4),
• wobei der Strahlteiler (2) einen Eingangslichtstrahl (5) in einen ersten Arm (6) und in einen zweiten Arm (7) aufteilt,
• wobei der erste Arm (6) von dem Strahlteiler reflektiert ist und der zweite Arm (7) durch den Strahlteiler (2) hindurch verläuft,
• wobei der erste Arm (6) nach Reflexion an der Spiegelvorrichtung (3) an dem Strahlteiler (2) vorbei umlenkungsfrei zu der Sammeloptik (4) verläuft,
• wobei der zweite Arm (7) nach Durchlaufen des Strahlteilers (2) umlenkungsfrei zu der Sammeloptik (4) verläuft,
• wobei der erste Arm (6) und der zweite Arm (7) eine identische optische Weglänge beschreiben,
• wobei die Sammeloptik (4) den ersten Arm (6) und den zweiten Arm (7) zur Interferenz (13) zusammenführt, und
• wobei der erste Arm (6) einen ersten geradlinigen Abschnitt (8) aufweist, der sich zwischen der Spiegelvorrichtung (3) und der Sammeloptik (4) erstreckt und der zweite Arm (7) einen zweiten geradlinigen Abschnitt (9) aufweist, der sich zwischen Strahlteiler (2) und Sammeloptik (4) erstreckt, wobei der erste geradlinige Abschnitt (8) und der zweite geradlinige Abschnitt (9) parallel ausgerichtet sind, oder einen Winkel von maximal 10° zueinander einnehmen.

2. Statisches Fourier-Transformations-Spektrometer (1) nach Anspruch 1, **dadurch gekennzeichnet, dass** ein Brechungsindex des Strahlteilers (2) größer ist als ein Brechungsindex einer Umgebung des statischen Fourier-Transformations-Spektrometer (1), sodass ein optischer Weg des zweiten Arms (7) unterschiedlich von einem geometrischen Weg des zweiten Arms (7) ist.

3. Statisches Fourier-Transformations-Spektrometer (1) nach einem der vorhergehenden Ansprüche, **dadurch gekennzeichnet, dass** ausschließlich der erste Arm (6) an der Spiegelvorrichtung (3) reflektiert ist.

4. Statisches Fourier-Transformations-Spektrometer (1) nach einem der vorhergehenden Ansprüche, **dadurch gekennzeichnet, dass** der erste Arm (6) von maximal einer Spiegelvorrichtung (3) reflektiert ist.

5. Statisches Fourier-Transformations-Spektrometer (1) nach einem der vorhergehenden Ansprüche, **dadurch gekennzeichnet, dass** der erste geradlinige Abschnitt (8) und der zweite geradlinige Abschnitt (9) einen Winkel von maximal 1°, insbesondere maximal 0,5°, zueinander einnehmen.

6. Statisches Fourier-Transformations-Spektrometer (1) nach einem der vorhergehenden Ansprüche, **gekennzeichnet durch** einen Zeilendetektor (12), wobei die Sammeloptik (4) den ersten Arm (6) und den zweiten Arm (7) auf dem Zeilendetektor (12) zur Interferenz (13) zusammenführt.

7. Statisches Fourier-Transformations-Spektrometer (1) nach einem der vorhergehenden Ansprüche, **gekennzeichnet durch** einen zweidimensionalen Array-Flächendetektor, wobei die Sammeloptik (4) den ersten Arm (6) und den zweiten Arm (7) auf dem zweidimensionalen Array-Flächendetektor zur Interferenz (13) zusammenführt.

8. Statisches Fourier-Transformations-Spektrometer (1) nach einem der vorhergehenden Ansprüche, **gekennzeichnet durch** eine Vorschaltoptik (10), die vor dem Strahlteiler (2) angeordnet ist, sodass der Eingangslichtstrahl (5) von der Vorschaltoptik (10) auf den Strahlteiler (2) leitbar ist, wobei die Vorschaltoptik (10) eine Konvexlinse und/oder einen Konkavspiegel, insbesondere einen off-axis Konkavspiegel, umfasst.

9. Statisches Fourier-Transformations-Spektrometer (1) nach einem der vorhergehenden Ansprüche, **gekennzeichnet durch** eine Nachschaltoptik (11), die hinter der Sammeloptik (4) angeordnet ist, sodass der erste Arm (6) und der zweiter Arm (7) von der Sammeloptik (4) erst nach Durchlaufen der Nachschaltoptik (11) zur Interferenz (13) zusammenführbar sind, wobei die Nachschaltoptik (11) eine Zylinderlinse umfasst.

10. Statisches Fourier-Transformations-Spektrometer (1) nach Anspruch 9, **dadurch gekennzeichnet, dass** eine optische Achse der Nachschaltoptik (11) gegenüber einem geradlinigen Abschnitt (8, 9) des ersten Arms (6) und/oder des zweiten Arms (7) verkippt ist, insbesondere um einen Winkel zwischen 0° und 40°.

11. Statisches Fourier-Transformations-Spektrometer (1) nach einem der vorhergehenden Ansprüche, **dadurch gekennzeichnet, dass** die Sammeloptik (4) eine Konvexlinse und/oder einen Konkavspiegel, insbesondere einen off-axis Konkavspiegel, umfasst.

12. Statisches Fourier-Transformations-Spektrometer (1) nach einem der vorhergehenden Ansprüche, **dadurch gekennzeichnet, dass** die Spiegelvorrichtung (3) einen Stufenspiegel (21) aufweist.

13. Statisches Fourier-Transformations-Spektrometer (1) nach Anspruch 12, **dadurch gekennzeichnet, dass** der Stufenspiegel (21) zumindest zwei parallele Spiegeloberflächen (22, 23, 24, 25) aufweist, die beabstandet zueinander angeordnet sind.

14. Statisches Fourier-Transformations-Spektrometer (1) nach Anspruch 13, **dadurch gekennzeichnet, dass** ein Abstand zwischen jeder der Spiegeloberflächen (22, 23, 24, 25) ein ganzzahliges Vielfaches einer vordefinierten Stufenhöhe (hₛ) beträgt.

15. Statisches Fourier-Transformations-Spektrometer (1) nach einem der Ansprüche 13 oder 14, **gekennzeichnet durch** einen Array-Flächendetektor (16), wobei die Sammeloptik (4) den ersten Arm (6) und den zweiten Arm (7) zur Interferenz (13) auf dem Array-Flächendetektor (16) zusammenführt, und wobei der Array-Flächendetektor (16) in unterschiedliche Abschnitte aufgeteilt ist, sodass jedem der unterschiedlichen Abschnitte eine Spiegeloberfläche (22, 23, 24, 25) zugeordnet ist, um zumindest zwei unterschiedliche optische Pfaddifferenzen zwischen dem ersten Arm (6) und dem zweiten Arm (7) in den unterschiedlichen Abschnitten abzubilden.

## Claims

1. Static Fourier transform spectrometer (1) comprising:
• a beam splitter (2),
• a mirror device (3), and
• a collection optic (4),
• wherein the beam splitter (2) divides an incident light beam (5) into a first arm (6) and a second arm (7),
• wherein the first arm (6) is reflected by the beam splitter and the second arm (7) passes through the beam splitter (2),
• wherein the first arm (6), after reflection on the mirror device (3), travels past the beam splitter (2) without deflection to the collection optic (4),
• wherein the second arm (7), after passing through the beam splitter (2), travels without deflection to the collection optic (4),
• wherein the first arm (6) and the second arm (7) describe an identical optical path length,
• wherein the collection optic (4) merges the first arm (6) and the second arm (7) for interference (13), and
• wherein the first arm (6) has a first rectilinear portion (8) extending between the mirror device (3), and the collection optic (4) and the second arm (7) has a second rectilinear portion (9) extending between the beam splitter (2) and collection optic (4), wherein the first rectilinear portion (8) and the second rectilinear portion (9) are aligned in parallel, or form an angle of at most 10° with each other.

2. Static Fourier transform spectrometer (1) according to claim 1, **characterised in that** a refractive index of the beam splitter (2) is greater than a refractive index of an environment of the static Fourier transform spectrometer (1), so that an optical path of the second arm (7) is different from a geometric path of the second arm (7).

3. Static Fourier transform spectrometer (1) according to any one of the preceding claims, **characterised in that** only the first arm (6) is reflected by the mirror device (3).

4. Static Fourier transform spectrometer (1) according to any one of the preceding claims, **characterised in that** the first arm (6) is reflected by a maximum of one mirror device (3).

5. Static Fourier transform spectrometer (1) according to any one of the preceding claims, **characterised in that** the first rectilinear portion (8) and the second rectilinear portion (9) form an angle of at most 1° with each other, in particular at most 0.5°.

6. Static Fourier transform spectrometer (1) according to any one of the preceding claims, **characterised by** a line detector (12), wherein the collection optic (4) merges the first arm (6) and the second arm (7) on the line detector (12) for interference (13).

7. Static Fourier transform spectrometer (1) according to any one of the preceding claims, **characterised by** a two-dimensional array area detector, wherein the collection optic (4) merges the first arm (6) and the second arm (7) on the two-dimensional array area detector for interference (13).

8. Static Fourier transform spectrometer (1) according to any one of the preceding claims, **characterised by** an upstream optic (10), which is arranged in front of the beam splitter (2), so that the incident light beam (5) can travel from the upstream optic (10) to the beam splitter (2), wherein the upstream optic (10) comprises at least one of a convex lens and/or a concave mirror, in particular an off-axis concave mirror.

9. Static Fourier transform spectrometer (1) according to any one of the preceding claims, **characterised by** a downstream optic (11), which is arranged behind the collection optic (4), so that the first arm (6) and the second arm (7) can be merged by the collection optic (4) for interference (13) only after passing through the downstream optic (11), wherein the downstream optic (11) comprises a cylindrical lens.

10. Static Fourier transform spectrometer (1) according to claim 9, **characterised in that** an optical axis of the downstream optic (11) is tilted relative to a rectilinear portion (8, 9) of the first arm (6) and/or the second arm (7), in particular by an angle between 0° and 40°.

11. Static Fourier transform spectrometer (1) according to any one of the preceding claims, **characterised in that** the collection optic (4) comprises at least one of a convex lens and/or a concave mirror, in particular an off-axis concave mirror.

12. Static Fourier transform spectrometer (1) according to any one of the preceding claims, **characterised in that** the mirror device (3) comprises a stepped mirror (21).

13. Static Fourier transform spectrometer (1) according to claim 12, **characterised in that** the stepped mirror (21) has at least two parallel mirror surfaces (22, 23, 24, 25) that are spaced apart from each other, respectively.

14. Static Fourier transform spectrometer (1) according to claim 13, **characterised in that** a distance between each of the mirror surfaces (22, 23, 24, 25) is an integer multiple of a predefined step height (hₛ).

15. Static Fourier transform spectrometer (1) according to any one of claims 13 or 14, **characterised by** an array area detector (16), wherein the collection optic (4) merges the first arm (6) and the second arm (7) on the two-dimensional array area detector (16) for interference (13), and wherein the array area detector (16) is divided into different sections so that each of the different sections has a corresponding mirror surface (22, 23, 24, 25) to image at least two different optical path differences between the first arm (6) and the second arm (7) in the different sections.

## Revendications

1. Spectromètre statique à transformée de Fourier (1) comprenant
• un séparateur de faisceaux (2),
• un dispositif (3) formant miroir, et
• une optique de collecte (4),
• le séparateur de faisceau (2) divisant un faisceau lumineux incident (5) en une première branche (6) et une deuxième branche (7),
• la première branche (6) étant réfléchie par le séparateur de faisceau et la deuxième branche (7) traversant le séparateur de faisceau (2),
• la première branche (6), après réflexion sur le dispositif (3) formant miroir, cheminant au-delà du séparateur de faisceau (2), sans déviation, vers l'optique collectrice (4),
• la deuxième branche (7), après avoir traversé le séparateur de faisceau (2), cheminant sans déflexion vers l'optique de collecte (4),
• la première branche (6) et la deuxième branche (7) décrivant une longueur de chemin optique identique,
• l'optique de collecte (4) réunissant la première branche (6) et la deuxième branche (7) pour interférence (13), et
• la première branche (6) ayant une première partie rectiligne (8) s'étendant entre le dispositif (3) formant miroir et l'optique de collecte (4) et la deuxième branche (7) ayant une deuxième partie rectiligne (9) s'étendant entre le séparateur de faisceau (2) et l'optique de collecte (4), la première partie rectiligne (8) et la deuxième partie rectiligne (9) étant alignées parallèlement ou sous un angle de 10° maximum l'une par rapport à l'autre.

2. Spectromètre statique à transformée de Fourier (1) selon la revendication 1, **caractérisé en ce qu'**un indice de réfraction du séparateur de faisceau (2) est supérieur à un indice de réfraction d'un environnement du spectromètre statique à transformée de Fourier (1) de sorte qu'un trajet optique de la deuxième branche (7) est différent d'un trajet géométrique de la deuxième branche (7).

3. Spectromètre statique à transformée de Fourier (1) selon l'une des revendications précédentes, **caractérisé en ce que** seule la première branche (6) est réfléchie sur le dispositif (3) formant miroir.

4. Spectromètre statique à transformée de Fourier (1) selon l'une des revendications précédentes, **caractérisé en ce que** la première branche (6) est réfléchi par au plus un dispositif (3) formant miroir.

5. Spectromètre statique à transformée de Fourier (1) selon l'une des revendications précédentes, **caractérisé en ce que** la première partie rectiligne (8) et la deuxième partie rectiligne (9) forment un angle d'au plus 1°, en particulier d'au plus 0,5°, l'une par rapport à l'autre.

6. Spectromètre statique à transformée de Fourier (1) selon l'une des revendications précédentes, **caractérisé par** un détecteur linéaire (12), l'optique de collecte (4) combinant la première branche (6) et la deuxième branche (7) sur le détecteur linéaire (12) pour interférence (13).

7. Spectromètre statique à transformée de Fourier (1) selon l'une des revendications précédentes, **caractérisé par** un détecteur de surface de réseau bidimensionnel, l'optique de collecte (4) combinant la première branche (6) et la deuxième branche (7) sur le détecteur de surface de réseau bidimensionnel pour interférence (13).

8. Spectromètre (1) à transformée de Fourier statique selon l'une des revendications précédentes, **caractérisé par** une optique amont (10) qui est disposée devant le séparateur de faisceau (2) de sorte que le faisceau lumineux incident (5) est apte à être conduit depuis l'optique amont (10) vers le séparateur de faisceau (2), l'optique amont (10) comprenant une lentille convexe et/ou un miroir concaves, notamment un miroir concaves non axial.

9. Spectromètre statique à transformée de Fourier (1) selon l'une des revendications précédentes, **caractérisé par** une optique amont (11) qui est disposée derrière l'optique de collecte (4) de sorte que la première branche (6) et la deuxième branche (7) de l'optique de collecte (4) ne peuvent être réunis pour interférence (13) qu'après passage dans l'optique amont (11), l'optique amont (11) comprenant une lentille cylindrique.

10. Spectromètre statique à transformée de Fourier (1) selon la revendication 9, **caractérisé en ce qu'**un axe optique du système optique aval (11) est incliné par rapport à une partie rectiligne (8, 9) de la première branche (6) et/ou de la deuxième branche (7), notamment selon un angle compris entre 0° et 40°.

11. Spectromètre statique à transformée de Fourier (1) selon l'une des revendications précédentes, **caractérisé en ce que** l'optique de collecte (4) comprend une lentille convexe et/ou un miroir concave, en particulier un miroir concave non axial.

12. Spectromètre statique à transformée de Fourier (1) selon l'une des revendications précédentes, **caractérisé en ce que** le dispositif (3) formant miroir comprend un miroir à gradins (21).

13. Spectromètre statique à transformée de Fourier (1) selon la revendication 12, **caractérisé en ce que** le miroir à gradins (21) présente au moins deux surfaces de miroir parallèles (22, 23, 24, 25) qui sont disposées à distance l'une de l'autre.

14. Spectromètre statique à transformée de Fourier (1) selon la revendication 13, **caractérisé en ce qu'**une distance entre chacune des surfaces de miroir (22, 23, 24, 25) est un multiple entier d'une hauteur de gradin prédéterminée (hₛ).

15. Spectromètre statique à transformée de Fourier (1) selon l'une des revendications 13 ou 14, **caractérisé par** un détecteur de surface de réseau (16), l'optique de collecte (4) combinant la première branche (6) et la deuxième branche (7) pour interférence (13) sur le détecteur de surface de réseau (16), et dans lequel le détecteur de surface de réseau (16) est divisé en différentes portions de sorte que chacune des différentes portions est associée à une surface de miroir (22, 23, 24, 25) pour former une image d'au moins deux différences de chemin optique qui sont différentes entre la première branche (6) et la deuxième branche (7) dans les différentes portions.
